# EUROPEAN PATENT APPLICATION

(11) **EP 4 539 547 A1**
(43) Date of publication of application: **16.04.2025**
(21) Application number: 23819096.1
(22) Date of filing: 06.06.2023
(51) Int. Cl.: H04W 40/22

(54) **RELAY COMMUNICATION METHOD AND APPARATUS, AND USER EQUIPMENT**

(30) Priority: 09.06.2022 CN 202210648837
(71) Applicant: Vivo Mobile Communication Co., Ltd., Dongguan, Guangdong 523863 (CN)
(72) Inventor: LIU, Jiamin, Dongguan, Guangdong 523863 (CN)
(74) Representative: Michalski Hüttermann & Partner Patentanwälte mbB
(86) International application number: PCT/CN2023/098500
(87) International publication number: WO 2023/236931

(57) **Abstract**

This application discloses a relay communication method and apparatus, and a terminal, and relates to the field of mobile communication. The relay communication method according to an embodiment of this application includes: A first device obtains first information, where the first information includes configuration information for establishing a bearer of first communication. The first device establishes, with a second device, the bearer of the first communication based on the first information, and communicates therewith. The first device is one of a source terminal and a destination terminal, and the second device is the other of the source terminal and the destination terminal. The first communication is sidelink relay communication. The first information includes at least one of the following: first configuration information that is end-to-end configuration information in the configuration information of the bearer; and second configuration information that is hop-by-hop configuration information corresponding to a first target hop between the first device and a third device in the configuration information of the bearer, where the third device is a relay device connected to the first device in the first communication.

## Description

### CROSS-REFERENCE TO RELATED APPLICATIONS

The present invention claims priority to Chinese Patent Application No. 202210648837.1, filed with the China National Intellectual Property Administration on June 9, 2022 and entitled "RELAY COMMUNICATION METHOD AND APPARATUS, AND TERMINAL", which is incorporated herein by reference in its entirety.

### TECHNICAL FIELD

This application relates to the field of mobile communication technologies, and in particular, to a relay communication method and apparatus, and a terminal.

### BACKGROUND

In a sidelink relay communication (sidelink relay) scenario from a terminal (also referred to as User Equipment (UE)) to a terminal (UE-to-UE, U2U), there are remote terminals (remote UEs) at both ends and at least one intermediate relay terminal (relay UE). In this scenario, the two remote terminals (that is, a source terminal remote terminal remote UE1 and a destination terminal remote UE2) allow the relay UE to forward, through a sidelink (sidelink) between the remote terminals and the relay UE, data transmitted between the remote UE1 and the remote UE2, and the relay UE achieves a data relay function.

A configuration manner of a bearer of sidelink relay communication at each terminal needs to be determined in the U2U sidelink relay scenario.

### SUMMARY

Embodiments of this application provide a relay communication method and apparatus, and a terminal, to implement a configuration of a bearer of sidelink relay communication at each terminal that needs to be determined in a U2U sidelink relay scenario.

According to a first aspect, a relay communication method is provided, and is applied to a first device. The method includes:
The first device obtains first information, where the first information includes configuration information for establishing a bearer of first communication.

The first device establishes, with a second device, the bearer of the first communication based on the first information, and communicates with the second device.

The first device is one of a source terminal and a destination terminal of the first communication, and the second device is the other of the source terminal and the destination terminal of the first communication. The first communication is sidelink relay communication. The first information includes at least one of the following:
first configuration information, where the first configuration information is end-to-end configuration information in the configuration information of the bearer; and
second configuration information, where the second configuration information is hop-by-hop configuration information corresponding to a first target hop between the first device and a third device in the configuration information of the bearer, and the third device is a relay device connected to the first device in the first communication.

According to a second aspect, a relay communication apparatus is provided, including:
a first transmission module, configured to obtain first information, where the first information includes configuration information for establishing a bearer of first communication; and
a first execution module, configured to establish, with a second device, the bearer of the first communication based on the first information, and communicate with the second device.

The relay communication apparatus is one of a source terminal and a destination terminal of the first communication, and the second device is the other of the source terminal and the destination terminal of the first communication. The first communication is sidelink relay communication. The first information includes at least one of the following:
first configuration information, where the first configuration information is end-to-end configuration information in the configuration information of the bearer; and
second configuration information, where the second configuration information is hop-by-hop configuration information corresponding to a first target hop between the relay communication apparatus and a third device in the configuration information of the bearer, and the third device is a relay device connected to a first device in the first communication.

According to a third aspect, a relay communication method is provided, and is applied to a fourth device. The method includes:
The fourth device obtains third information, where the third information includes configuration information related to the fourth device in configuration information for establishing a bearer of first communication.

The fourth device establishes a hop-by-hop sidelink bearer of a second target hop and/or a hop-by-hop sidelink bearer of a third target hop based on the third information.

The fourth device is one of relay devices in the first communication. The second target hop is a hop between the fourth device and an upstream device, and the third target hop is a hop between the fourth device and a downstream device. The upstream device is a relay device or a first device of the first communication, and the downstream device is a relay device or a second device of the first communication. The first device is one of a source terminal and a destination terminal of the first communication, and the second device is the other of the source terminal and the destination terminal of the first communication. The first communication is sidelink relay communication. The third information includes at least one of the following:
third configuration information, where the third configuration information is configuration information of the second target hop in the configuration information of the bearer; and
fourth configuration information, where the fourth configuration information is configuration information of the third target hop in the configuration information of the bearer.

According to a fourth aspect, a relay communication apparatus is provided, including:
a second transmission module, configured to obtain third information, where the third information includes configuration information related to the relay communication apparatus in configuration information for establishing a bearer of first communication; and
a second execution module, configured to establish a hop-by-hop sidelink bearer of a second target hop and/or a hop-by-hop sidelink bearer of a third target hop based on the third information.

The relay communication apparatus is one of relay devices in the first communication. The second target hop is a hop between the relay communication apparatus and an upstream device, and the third target hop is a hop between the relay communication apparatus and a downstream device. The upstream device is a relay device or a first device of the first communication, and the downstream device is a relay device or a second device of the first communication. The first device is one of a source terminal and a destination terminal of the first communication, and the second device is the other of the source terminal and the destination terminal of the first communication. The first communication is sidelink relay communication. The third information includes at least one of the following:
third configuration information, where the third configuration information is configuration information of the second target hop in the configuration information of the bearer; and
fourth configuration information, where the fourth configuration information is configuration information of the third target hop in the configuration information of the bearer.

According to a fifth aspect, a terminal is provided. The terminal includes a processor and a memory. The memory stores a program or instructions that can run on the processor, and the program or instructions, when executed by the processor, implement the steps of the method according to the first aspect.

According to a sixth aspect, a terminal is provided, including a processor and a communication interface, where the processor is configured to establish, with a second device, a bearer of first communication based on first information, and communicate with the second device, and the communication interface is configured to obtain the first information. The first information includes configuration information for establishing the bearer of the first communication.

According to a seventh aspect, another terminal is provided. The terminal includes a processor and a memory. The memory stores a program or instructions that can run on the processor, and the program or instructions, when executed by the processor, implement the steps of the method according to the third aspect.

According to an eighth aspect, a terminal is provided, including a processor and a communication interface, where the processor is configured to establish a hop-by-hop sidelink bearer of a second target hop and/or a hop-by-hop sidelink bearer of a third target hop based on third information, and the communication interface is configured to obtain the third information. The third information includes configuration information related to a fourth device in configuration information for establishing a bearer of first communication.

According to a ninth aspect, a relay communication system is provided, including: a first device and a fourth device, where the first device may be configured to perform the steps of the relay communication method according to the first aspect, and the fourth device may be configured to perform the steps of the relay communication method according to the third aspect.

According to a tenth aspect, a readable storage medium is provided. The readable storage medium stores a program or instructions. The program or instructions, when executed by a processor, implement the steps of the method according to the first aspect, or the steps of the method according to the third aspect.

According to an eleventh aspect, a chip is provided. The chip includes a processor and a communication interface. The communication interface is coupled to the processor. The processor is configured to run a program or instructions to implement the method according to the first aspect, or implement the method according to the third aspect.

According to a twelfth aspect, a computer program/program product is provided. The computer program/program product is stored in a storage medium. The computer program/program product is executed by at least one processor to implement the steps of the relay communication method according to the first aspect or the third aspect.

In the embodiments of this application, first information is obtained, where the first information includes configuration information for establishing a bearer of first communication; and the bearer of the first communication is established with a second device based on the first information, and communication therewith is performed, where the first information includes first configuration information for establishing an end-to-end sidelink bearer and/or second configuration information for establishing a hop-by-hop sidelink bearer. Therefore, a bearer configuration of sidelink relay communication can be quickly performed, to implement service data transmission on a U2U path or even a multi-hop U2U path.

### BRIEF DESCRIPTION OF THE DRAWINGS

FIG. 1 is a schematic diagram of a structure of an applicable wireless communication system according to an embodiment of this application;
FIG. 2 is a schematic diagram of a structure of a relay communication system according to an embodiment of this application;
FIG. 3 is a schematic flowchart of a relay communication method according to an embodiment of this application;
FIG. 4 is a schematic flowchart of another relay communication method according to an embodiment of this application;
FIG. 5 is a schematic flowchart of still another relay communication method according to an embodiment of this application;
FIG. 6 is a schematic flowchart of yet another relay communication method according to an embodiment of this application;
FIG. 7 is a schematic flowchart of a further relay communication method according to an embodiment of this application;
FIG. 8 is a schematic flowchart of a still further relay communication method according to an embodiment of this application;
FIG. 9 is a schematic flowchart of a yet further relay communication method according to an embodiment of this application;
FIG. 10 is a schematic flowchart of a still yet further relay communication method according to an embodiment of this application;
FIG. 11 is a schematic diagram of a structure of a relay communication apparatus according to an embodiment of this application;
FIG. 12 is a schematic flowchart of even yet another relay communication method according to an embodiment of this application;
FIG. 13 is a schematic diagram of a structure of another relay communication apparatus according to an embodiment of this application;
FIG. 14 is a schematic diagram of a structure of a communication device according to an embodiment of this application;
FIG. 15 is a schematic diagram of a structure of a terminal according to an embodiment of this application; and
FIG. 16 is a schematic diagram of a structure of another terminal according to an embodiment of this application.

### DETAILED DESCRIPTION

The technical solutions in embodiments of this application are clearly described below with reference to the accompanying drawings in the embodiments of this application. Clearly, the described embodiments are some rather than all of the embodiments of this application. Based on the embodiments of this application, all other embodiments obtained by a person of ordinary skill in the art fall within the protection scope of this application.

The terms such as "first" and "second" in the specification and claims of this application are intended to distinguish between similar objects, but are not intended to describe a specific sequence or order. It should be understood that the terms used in such a way may be interchanged under appropriate circumstances so that the embodiments of this application can be implemented in an order other than those illustrated or described herein, the objects distinguished by "first" and "second" are usually of one type, and a quantity of objects is not limited. For example, one or more first objects may be provided. In addition, "and/or" in the specification and the claims indicates at least one of connected objects, and the character "/" generally indicates an "or" relationship between associated objects.

It should be noted that the technologies described in the embodiments of this application are not limited to a long term evolution (Long Term Evolution, LTE)/LTE-advanced (LTE-Advanced, LTE-A) system, and may be also applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single-carrier Frequency Division Multiple Access, SC-FDMA) and other systems. The terms "system" and "network" in the embodiments of this application are often used interchangeably, and the described technology can be applied to the systems and radio technologies mentioned above, and can be also applied to other systems and radio technologies. The following description describes a new radio (New Radio, NR) system for example purposes, and NR terms are used in most of the following descriptions, but these technologies can be also applied to applications other than NR system applications, such as 6th generation (6th Generation, 6G) communication systems.

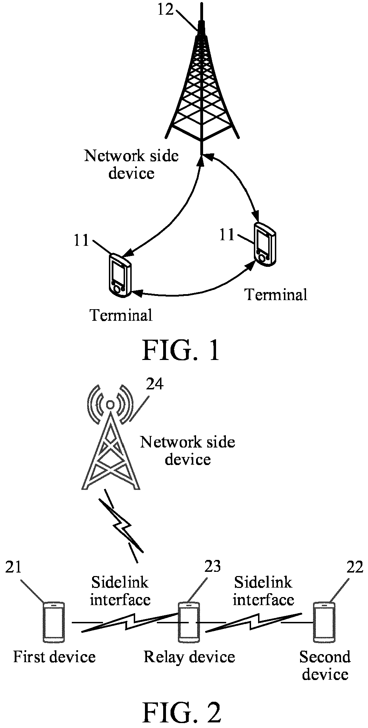

FIG. 1 is a block diagram of an applicable wireless communication system according to an embodiment of this application. The wireless communication system includes a terminal 11 and a network side device 12. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a household device with a wireless communication function, such as a refrigerator, a television, a washing machine or furniture), a game console, a personal computer (personal computer, PC), an automated teller machine or a self-service machine or other terminal-side devices. The wearable device includes a smartwatch, a smart band, a smart headset, smart glasses, smart jewelry (a smart bracelet, a smart chain bracelet, a smart ring, a smart necklace, a smart anklet, a smart ankle chain, or the like), a smart wrist strap, a smart garment, or the like. It should be noted that a specific type of the terminal 11 is not limited in the embodiment of this application. The network side device 12 may include an access network device or a core network device, where the access network device 12 may be also referred to as a radio access network device, a radio access network (Radio Access Network, RAN), a radio access network function, or a radio access network unit. The access network device 12 may include a base station, a wireless local area network (Wireless Local Area Network, WLAN) access point or a WiFi node, or the like. The base station may be referred to as a Node B, an evolved Node B (evolved Node B, eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmitting receiving point (Transmitting Receiving Point, TRP) or some other appropriate term in the field. As long as the same technical effect is achieved, the base station is not limited to a specific technical vocabulary. It should be noted that in the embodiment of this application, only a base station in an NR system is described as an example, and a specific type of the base station is not limited. The core network device may include, but is not limited to, at least one of the following: a core network node, a core network function, a mobility management entity (MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a Unified Data Repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (local NEF, or L-NEF), a binding support function (Binding Support Function, BSF), an Application Function (Application Function, AF), and the like. It should be noted that in the embodiment of this application, only a core network device in an NR system is described as an example, and a specific type of the core network device is not limited.

A relay communication method and apparatus, and a terminal according to embodiments of this application are described in detail below by some embodiments and application scenarios thereof with reference to the accompanying drawings.

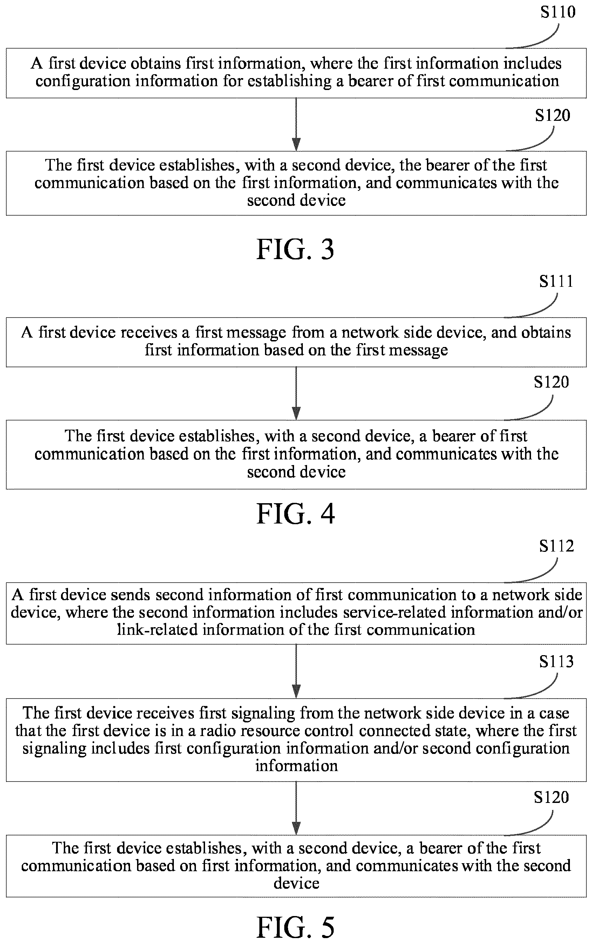

As shown in FIG. 2 and FIG. 3, an embodiment of this application provides a relay communication method, and an executing body of the method is a first device 21. In other words, the method may be performed by software or hardware installed on the first device. The method includes:
S110: The first device obtains first information, where the first information includes configuration information for establishing a bearer of first communication.

The first communication is sidelink relay communication. As shown in FIG. 2, the first communication means U2U sidelink relay communication between the first device 21 and a second device 22. Data relay is performed between the first device 21 and the second device 22 through N relay devices 23, where N is a positive integer. Data is transmitted between the first device 21 and the relay devices 23, between the relay devices 23, and between the relay devices 23 and the second device 22 through sidelink interfaces (PC5).

The first device 21 may be one of a source terminal and a destination terminal of the first communication, and the second device 22 may be the other of the source terminal and the destination terminal of the first communication. Each relay device 23 may be a relay terminal relay UE between the source terminal and the destination terminal in the first communication.

The source terminal may be a service initiating end device of the first communication, or may be a service flow sending end device in a service transmission process of the first communication, and correspondingly, the destination terminal may be a service receiving end device of the first communication, or may be a service flow receiving end device in the service transmission process of the first communication.

The configuration information for establishing the bearer of the first communication may be determined by the first device 21 and configured and/or maintained. The first device 21 may be provided based on actual requirements. In an implementation, the first device may be one of the following:
a service initiating end device of the sidelink relay communication;
a service flow sending end device of the sidelink relay communication;
a service flow receiving end device of the sidelink relay communication; and
one of the source terminal and the destination terminal of the sidelink relay communication.

In an implementation, for each service, or for a two-way service, a service flow initiating end device may determine configuration information of a bearer, and dominate a configuration and/or maintenance process. For example, in a one-way service, when remote UE1 performs transmission to remote UE2, configuration information of a bearer corresponding to the one-way service may be determined by the remote UE1 as the first device 21, and configured and/or maintained to the peer remote UE2 by a sidelink radio resource control (PC5 RRC) process. For another example, in a two-way service composed of service flows in two directions, the remote UE1 may determine configuration information of a bearer corresponding to the service flow sent by the remote UE1 to the remote UE2 and dominate a configuration and/or maintenance process, while the remote UE2 may determine configuration information of a bearer corresponding to the service flow sent by the remote UE2 to the remote UE1 in a reverse direction and dominate configuration and/or maintenance. The manner has the advantages that for each service or service flow in each direction, since a remote UE that generates the service understands the service best, an accurate configuration and/or maintenance process can be provided.

In another implementation, for each service, or for a one-way service, a service initiating end device may determine configuration information of a bearer, and perform configuration and/or maintenance. For example, in a one-way service, the service initiating end remote UE1 determines configuration information of a bearer and dominates a configuration and/or maintenance process thereof. For another example, in a two-way service, a service initiating end remote UE may determine configuration information of a bearer and dominate a configuration and/or maintenance process thereof, without distinguishing between service flow directions of the two-way service, and all directions are determined and dominated by the remote UE1. If a two-way service is initiated by the remote UE1, although the remote UE2 has a service flow in a reverse direction, only the remote UE1 determines configuration information of a bearer and dominates a configuration and/or maintenance process. This manner has the advantages of avoiding a process of configuration conflict or failure, reducing a delay in signaling interaction in a U2U relay scenario involving a relay UE or even a plurality of relay UEs, and improving configuration and control efficiency.

In another implementation, for each service, no matter whether the service is one-way or two-way, one of the source terminal and the destination terminal that is determined based on regulations determines configuration information of a bearer and dominates a configuration and/or maintenance process. The regulations may be set based on actual requirements.

In an embodiment, a default rule may be taken for determining, for example, by a UE that initiates a sidelink communication establishing request first. For example, if the remote UE1 initiates a communication request (Direct Communication Request, DCR) first, the remote UE1 determines configuration information of a bearer and dominates the configuration and/or maintenance process thereof.

In another embodiment, configuration information of a bearer may alternatively be determined and the configuration and/or maintenance process thereof may alternatively be dominated by an actual providing end UE of a service based on a status of the service. For example, when data is transmitted between two UEs, the UE that provides the data determines configuration information of a bearer and dominates the configuration and/or maintenance process thereof.

In another embodiment, alternatively, based on negotiation between two UEs, one of the UEs may be recommended to determine configuration information of a bearer and dominate the configuration and/or maintenance process thereof. For example, in the interaction process between two UEs in PC5-S or PC5 RRC, the UEs exchange some information or tendencies about determining control rights. If one of the UEs is in a state of being out of network coverage (Out of Coverage, OOC), while the other UE is in network coverage and is in an RRC connected state, obviously, the second UE may determine configuration information of a bearer and dominate the configuration and/or maintenance process thereof since the second UE can receive more assistance from the network side.

It should be noted that if the first device that determines the configuration information of the bearer and dominates the configuration and/or maintenance process is not the source terminal, the first device needs to first obtain service-related information and/or link-related information of the first communication, which may be specifically obtained from the source terminal by a sidelink radio resource control process, a PC5-S process, or a service layer.

The first information includes at least one of the following:
first configuration information, where the first configuration information is end-to-end configuration information in the configuration information of the bearer; and
second configuration information, where the second configuration information is hop-by-hop configuration information corresponding to a first target hop between the first device and a third device in the configuration information of the bearer, and the third device is a relay device connected to the first device in the first communication.

In a case that the first device is the source terminal, the first target hop is a hop from the source terminal to a first relay terminal directly connected to the source terminal in N+1 hops between the source terminal and the destination terminal, that is, a first hop. In a case that the first device is the destination terminal, the first target hop is a hop from the destination terminal to an Nth relay terminal directly connected to the destination terminal, that is, a (N+1)^{th} hop.

In an implementation, the first communication is one of the following:
layer 2 (L2) sidelink relay communication, that is, an L2 U2U scenario; and
layer 3 (L3) sidelink relay communication, that is, an L3 U2U scenario.

In a case that the first communication is the L2 U2U scenario, the first communication needs to establish an end-to-end sidelink bearer (End to End Sidelink Bearer, E2E SLRB) and a hop-by-hop (Hop-by-Hop) sidelink bearer corresponding to hops from the first device to the second device. The bearer may be also referred to as a radio link control bearer (Radio Link Control Bearer, RLC Bearer) or a radio link control channel (RLC Channel). For the sake of simplicity, the RLC Bearer is taken as an example for illustration in the following embodiments. Correspondingly, the configuration information of the bearer of the first communication may include first configuration information corresponding to the E2E SLRB and second configuration information corresponding to the RLC Bearer.

The first configuration information mainly includes configuration information of a packet data convergence protocol layer (Packet Data Convergence Protocol layer, PDCP layer) and an upper layer, and including at least one of the following:
the configuration information of the packet data convergence protocol layer;
configuration information of a service data adaptation protocol layer (Service Data Adaptation Protocol layer, SDAP layer); and
an end-to-end sidelink bearer identifier (E2E SLRB ID).

The second configuration information in the L2 U2U scenario includes at least one of the following:
configuration information of a radio link control layer (RLC layer);
configuration information of a medium access control layer (medium access Control layer, MAC layer); and
configuration information of a physical layer (Physical layer, PHY layer).

In a case that the first communication is the L3 U2U scenario, since cach hop link between the first device and the second device is a layer 3 link (L3 link), the first communication needs to establish a sidelink bearer of each hop link, and the configuration information of the bearer of the first communication may include second configuration information corresponding to a sidelink bearer of each hop link.

The second configuration information in the L3 U2U scenario includes at least one of the following:
configuration information of a service data adaptation protocol layer;
configuration information of a packet data convergence protocol layer;
configuration information of a radio link control layer;
configuration information of a medium access control layer; and
configuration information of a physical layer.
S120: The first device establishes, with a second device, the bearer of the first communication based on the first information, and communicates with the second device.

After determining the configuration information of the bearer, the first device may configure the corresponding configuration information to the second device and the relay devices to establish the bearer of the first communication, and implement sidelink relay communication with the second device after the configuration is successful.

In the L2 U2U scenario, the first device may send the first configuration information to the second device by the sidelink radio resource control process to establish the E2E SLRB. The first device may further send the second configuration information to an adjacent relay device by the sidelink radio resource control process to establish a RCL bearer with the adjacent relay device.

In the L3 U2U scenario, the first device may send the service-related information and/or link-related information of the first communication to the second device and each relay device. For example, the first device may send service-related information and/or link-related information corresponding to each hop by signaling in the PC5-S process, and a sending end of each hop may obtain corresponding configuration information based on the corresponding service-related information and/or link-related information and send the configuration information to the peer to establish a sidelink bearer of each hop.

It can be seen from the above embodiments that for the first communication, one terminal may determine the configuration information of the bearer and dominate the configuration and/or maintenance process, or two terminals may determine configuration information of the bearer in different directions and dominate the configuration and/or maintenance process in the directions based on different service flow directions. The same terminal or different terminals may be also used to determine the first configuration information and the second configuration information, and dominate the configuration and/or maintenance process. However, for the sake of simplicity, in the following embodiments, an example in which a terminal determines the configuration information of the bearer and dominates the configuration and/or maintenance process is taken for illustration.

As can be seen from the technical solution of the above embodiment, in the embodiment of this application, first information is obtained, where the first information includes configuration information for establishing a bearer of first communication; and the bearer of the first communication is established with a second device based on the first information, and communication therewith is performed. The first information includes first configuration information for establishing an end-to-end sidelink bearer and/or second configuration information for establishing a hop-by-hop sidelink bearer. Therefore, a bearer configuration of sidelink relay communication can be quickly performed, to implement service data transmission on a U2U path or even a multi-hop U2U path.

Based on the above embodiment, further, as shown in FIG. 4, step S110 includes:
S111: The first device receives a first message from a network side device, and obtains the first information based on the first message,
where the first message includes at least one of the following:
the first configuration information and/or the second configuration information;
a configuration table, where the configuration table is used to search for the first configuration information and/or the second configuration information, and provide corresponding first configuration information and/or second configuration information by considering all possible service scenarios in advance; and
a mapping relationship between the first configuration information and the second configuration information.

The first message may be at least one of dedicated signaling, broadcast signaling, system information block (System Information Block, SIB) signaling, or pre-configured signaling depending on a network state of the first device.

In an implementation, as shown in FIG. 5, step S111 includes:
S113: The first device receives first signaling from the network side device in a case that the first device is in a radio resource control (Radio Resource Control, RRC) connected state, where the first signaling includes the first configuration information and/or the second configuration information.

The first signaling may be dedicated signaling, that is, the network side device directly delivers the first configuration information and/or the second configuration information to the first device.

The first signaling may further include the mapping relationship between the first configuration information and the second configuration information.

To obtain accurate first configuration information and/or second configuration information from the network side device, before the first signaling is received from the network side device, the method further includes:
S112: The first device sends second information of the first communication to the network side device, where the second information includes service-related information and/or link-related information of the first communication.

In an implementation, the service-related information of the first communication includes at least one of the following:
end-to-end quality of service (Quality of Service, QoS) parameter information; and
hop-by-hop QoS parameter information.

In an implementation, the hop-by-hop QoS parameter information includes at least one of the following:
QoS parameter information of a current hop;
QoS parameter information that has been allocated or occupied;
remaining QoS parameter information except the QoS parameter information that has been allocated or occupied; and
QoS segmentation information.

The QoS segmentation information is used to segment a QoS parameter, and determine a QoS parameter value of the current hop based on the end-to-end QoS parameter information, the hop-by-hop QoS parameter information, the QoS parameter information that has been allocated or occupied, and the characteristics of the current hop.

A packet delay budget (Packet Delay Budget, PDB) is taken as an example for illustration. Assuming that an end-to-end PDB requirement of a sidelink service is 100 ms (ms), during transmission through a relay device, a hop-by-hop PDB parameter of 50 ms may be used between the remote UE1 and the relay UE, and the remaining hop-by-hop PDB parameter of 50 ms may be used between the relay UE and the remote UE2, or 40 ms and 60 ms may be used therebetween respectively. Alternatively, during transmission through two relay devices, relay UE1 and relay UE2, the PDB between the remote UE1 and the relay UE1 is 30 ms, the PDB between the relay UE1 and the relay UE2 is 35 ms, and the PDB between the relay UE2 and the remote UE2 is 35 ms (the sum is equal to the end-to-end PDB of 100 ms), or the three periods are 20 ms, 40 ms, 40 ms, or the like. Each hop can only determine the PDB of the hop itself, and the PDB parameter of the current hop is obtained with reference to the end-to-end PDB, the PDB that has been occupied by other hops or the remaining PDB.

In an implementation, the link-related information of the first communication includes at least one of the following:

first relay indication information used to indicate that layer 2 or layer 3 end-to-end sidelink relay communication is used; and
hop-by-hop relay link information.
The hop-by-hop relay link information includes at least one of the following:
a total number of hops; and
a sequence number of a current hop.

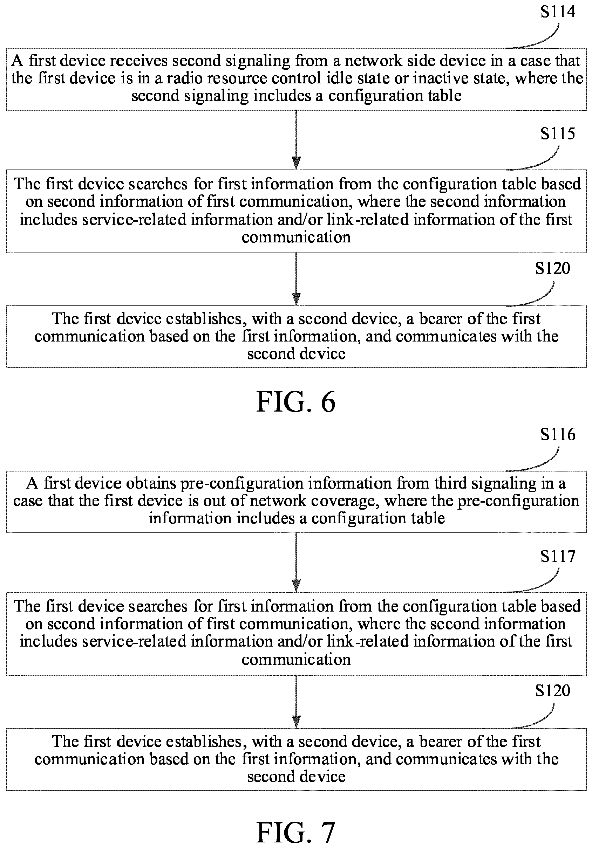

In another implementation, as shown in FIG. 6, step S111 includes:
S114: The first device receives second signaling from the network side device in a case that the first device is in a RRC idle (Idle) state or inactive (Inactive) state, where the second signaling includes the configuration table.

The configuration table includes a mapping relationship between the first information and the second information.

S115: The first device searches for the first information from the configuration table based on the second information of the first communication, where the second information includes service-related information and/or link-related information of the first communication.

The second signaling may be broadcast signaling or SIB.

The second signaling may further include the mapping relationship between the first configuration information and the second configuration information.

In another implementation, as shown in FIG. 7, step S111 includes:
S116: The first device obtains pre-configuration information from third signaling in a case that the first device is OOC, where the pre-configuration information includes the configuration table.

The configuration table includes a mapping relationship between the first information and the second information. The third signaling may be pre-configured signaling, and may be sent to the first device by the network side device when the first device is in a RRC connected state, inactive state or idle state.

S117: The first device searches for the first information from the configuration table based on the second information of the first communication, where the second information includes service-related information and/or link-related information of the first communication.

The third signaling may further include the mapping relationship between the first configuration information and the second configuration information.

In an implementation, step S115 or step S117 includes at least one of the following:

The first device searches for the first configuration information from the configuration table based on end-to-end related information in the second information;
the first device searches for the second configuration information from the configuration table based on the end-to-end related information and/or hop-by-hop related information in the second information; and
the first device searches for the second configuration information from the configuration table based on the end-to-end related information in the second information and/or the mapping relationship between the first configuration information and the second configuration information.

The end-to-end related information in the second information may include at least one of the following:
end-to-end QoS parameter information, information of a peer device, first relay indication information, hop-by-hop relay link information, a total number of hops, and the like.
The hop-by-hop related information in the second information may include at least one of the following:
hop-by-hop QoS parameter information, QoS parameter information of a current hop, QoS parameter information that has been allocated or occupied, remaining QoS parameter information except the QoS parameter information that has been allocated or occupied, QoS segmentation information, a sequence number of the current hop, and the like.

In an implementation, the configuration table used to search for the first configuration information and the second configuration information may be the same configuration table, or may include a first configuration table and a second configuration table. The first configuration table is used to search for the first configuration information, and the second configuration table is used to search for the second configuration information. The first device may obtain a first configuration table and a second configuration table from the network side device, then find the first configuration information from the first configuration table based on the end-to-end related information in the second information, and find the second configuration information from the second configuration table based on the end-to-end related information and/or the hop-by-hop related information in the second information.

For the sake of simplicity, in the following embodiments, the first configuration table and the second configuration table are taken as an example for illustration.

From the technical solution of the above embodiment, it can be seen that in the embodiment of this application, the first configuration information and/or the second configuration information is obtained in different manners when the first device is in different network states, so that a bearer configuration of sidelink relay communication can be flexibly implemented.

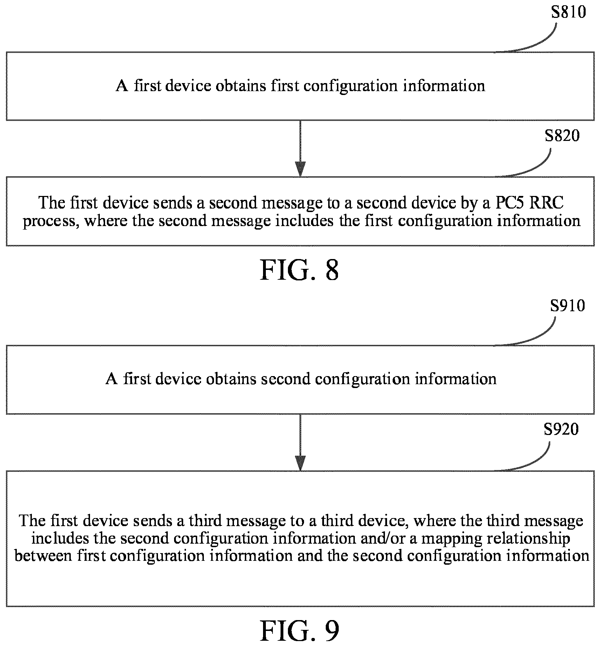

Based on the above embodiment, as shown in FIG. 8, a configuration and/or maintenance process for the first configuration information in the L2 U2U scenario includes the following steps.

S810: A first device obtains first configuration information.

The first configuration information is obtained based on a network state of the first device:

In a case that the first device is in a RRC connected state, the first configuration information is obtained from the network side device by steps S112 and S113; or
in a case that the first device is in a RRC idle state or inactive state, a first configuration table is obtained from the second signaling received from the network side device by steps S114 and S115, and the first configuration information is searched for from the first configuration table based on the end-to-end related information in the second information.

In a case that the first device is out of network coverage, a first configuration table is obtained from the third signaling by steps S116 and S117, and the first configuration information is searched for from the first configuration table based on the end-to-end related information in the second information.

It should be noted that since both the second signaling and the third signaling are common signaling, the first configuration table in each of the second signaling and the third signaling needs to take all possible service scenarios into account, to provide first configuration tables corresponding to the service scenarios, such as direct transmission, one-hop relay transmission, two-hop relay transmission, or N-hop relay transmission. Therefore, the network side device may be configured for different scenarios in the following manners:

In an embodiment, the same first configuration table is used for all scenarios without distinguishing between service scenarios, and then corresponding first configuration information is searched for from the first configuration table based on the service-related information in the end-to-end related information, such as the end-to-end QoS parameter information, so that the processing is simple, and signaling overheads are low.

In another embodiment, different service scenarios are distinguished and different first configuration tables are used. For example, a first configuration table A1 is used for direct transmission; a first configuration table A2 is used for U2U relay communication with relaying through a relay; or for U2U relay communication with relaying through a relay, a corresponding first configuration table is used for a different total number of hops; or different scenarios are grouped, and each scenario group corresponds to a different first configuration table. For example, a scenario group 1 corresponds to the first configuration table A1, a scenario group 2 corresponds to the first configuration table A2, ..., and a scenario group m corresponds to a first configuration table Am.

In another implementation, configuration parameters in the first configuration information fall into common parameters and distinguishing parameters. Since the common parameters are the same, the common first configuration table A0 may be used, while the distinguishing parameters may be separately configured by distinguishing different scenarios or different scenario groups. For example, if the first configuration information includes a common parameters and b distinguishing parameters, the a common parameters are universal for all scenarios, so that the a common parameters may be searched for from the common first configuration table A0; and the b distinguishing parameters correspond to different first configuration tables respectively with scenarios or scenario groups being distinguished. For a specific scenario, the first device may first search for the a parameters from the common first configuration table A0 based on service-related information in end-to-end related information, and then determine corresponding first configuration tables based on scenario groups to obtain corresponding b distinguishing parameters. Finally, a+b parameters are combined together to obtain the complete first configuration information.

With the above process, the first device obtains the first configuration information of the first communication, and then configures the first configuration information to the second device. Step S120 includes:
Step S820: The first device sends a second message to the second device by a PC5 RRC process, where the second message includes the first configuration information.

The first device and the second device cannot communicate directly, and thus need relaying through a relay device. Data relayed by the relay device is an E2E layer 2 protocol data unit (Protocol Data Unit, PDU), which is generally an encrypted packet data convergence protocol data unit (PDCP PDU), and the relay device cannot read the relayed data, to meet security and privacy requirements.

The PC5 RRC process may be to send the second message to the second device by a sidelink radio resource control reconfiguration (Sidelink RRC Reconfiguration) process,

In an implementation, if the first device receives a response of a reconfiguration completion (Reconfiguration Complete) message from the second device, it is determined that a configuration process of the end-to-end sidelink bearer is completed.

In another implementation, if the first device receives a response of reconfiguration failure (Reconfiguration Failure) message from the second device, it is determined that this configuration fails, a previous configuration needs to be restored, and a next configuration is performed based on a failure reason, failure indication information, or the like. The failure reason may be a configuration conflict between two terminals or a configuration failure of the second terminal.

From the technical solution of the above embodiment, it can be seen that in the embodiment of this application, the first configuration information is obtained and configured to the second device, to implement a configuration of an end-to-end sidelink bearer. Moreover, the end-to-end sidelink bearer can be matched based on different service scenarios and QoS parameter information, to transmit different service data on a U2U path or even a multi-hop U2U path, so as to guarantee and improve communication performance and system performance in reliability, throughput, and other aspects.

Based on the above embodiments, a configuration and/or maintenance process for the second configuration information in the L2 U2U scenario is as follows.

Since an end-to-end sidelink bearer cannot be transmitted between the first device and the second device directly through a sidelink, the bearer needs to be relayed through relay devices. A relay link includes RLC Bearers from the first device to an adjacent relay device, between two adjacent relay devices, and from an adjacent relay device to the second device, that is, the end-to-end sidelink bearer is mapped to the RCL Bearer of each hop for transmission at each hop, and finally reaches the second device.

Either of two end devices of each hop may dominate the configuration and/or maintenance process of the second configuration information, and may be the first device or a relay device. For example, if the first device is out of network coverage, the first device may send related information to a relay device, and the relay device may determine the second configuration information.

In an implementation, as shown in FIG. 9, a configuration and/or maintenance process of second configuration information is performed by a first device, including the following steps.

S910: The first device obtains second configuration information.

A method for determining the first device is as described in the above embodiment, and the first device may be a source terminal, a destination terminal, a service initiating end, a service flow sending end, or the like. Details are not described herein.

The second configuration information is obtained based on a network state of the first device:

In a case that the first device is in a RRC connected state, the second configuration information is obtained from the network side device by steps S112 and S113; or
in a case that the first device is in a RRC idle state or inactive state, a second configuration table is obtained from the second signaling received from the network side device by steps S114 and S115, and the second configuration information is searched for from the second configuration table based on the end-to-end related information and/or the hop-by-hop related information in the second information; or the second configuration information is searched for from the second configuration table based on the end-to-end related information in the second information and/or the mapping relationship between the first configuration information and the second configuration information.

In a case that the first device is out of network coverage, a second configuration table is obtained from the third signaling by steps S116 and S117, and the second configuration information is searched for from the second configuration table based on the end-to-end related information and/or the hop-by-hop related information in the second information; or the second configuration information is searched for from the second configuration table based on the end-to-end related information in the second information and/or the mapping relationship between the first configuration information and the second configuration information.

It should be noted that since both the second signaling and the third signaling are common signaling, the second configuration table in each of the second signaling and the third signaling needs to take all possible service scenarios into account, to provide second configuration tables corresponding to the service scenarios, and mapping relationships between the first configuration information and the second configuration information corresponding to the service scenarios may be further provided.

In an implementation, the second signaling and third signaling each may include a second configuration table corresponding to the end-to-end related information in the second information, such as a second configuration table B corresponding to end-to-end QoS parameter information, and the first device may obtain configuration parameters of the second configuration information from the second configuration table based on the end-to-end QoS parameter information. For example, if end-to-end QoS parameter information 1 is satisfied, a set 1 of configuration parameters of the second configuration information is searched for from the second configuration table B; if end-to-end QoS parameter information 2 is satisfied, a set 2 of configuration parameters of the second configuration information is searched for from the second configuration table B, and so on; if end-to-end QoS parameter information n is satisfied, a set n of configuration parameters of the second configuration information is searched for from the second configuration table B; or if there is no end-to-end QoS parameter information that satisfies a condition, a default set of configuration parameters of the second configuration information corresponds.

Based on the above embodiment, it can be seen that the first device may alternatively search for corresponding first configuration information from the first configuration table based on the end-to-end QoS parameter information. It can be seen that corresponding first configuration information and second configuration information may be found based on the same end-to-end QoS parameter information, so that a mapping relationship between the first configuration information and the second configuration information may be determined.

In an implementation, a corresponding relationship between end-to-end QoS parameters and first configuration information and second configuration information may be further added in the second signaling and/or the third signaling, and a set of end-to-end QoS parameter information corresponds to a set of first configuration information and a set of second configuration information. In this case, no matter whether the first device or the relay device is dominant, two pieces of mutually mapped first configuration information and second configuration information may be derived from the obtained end-to-end QoS parameter information, so as to determine a mapping relationship between the first configuration information and the second configuration information.

In another implementation, the second signaling and third signaling each may include a second configuration table corresponding to the hop-by-hop related information in the second information, such as a second configuration table B corresponding to hop-by-hop QoS parameter information, and the first device may obtain configuration parameters of the second configuration information from the second configuration table based on the hop-by-hop QoS parameter information. For example, if hop-by-hop QoS parameter information 1 is satisfied, a set 1 of configuration parameters of the second configuration information is searched for from the second configuration table B; if hop-by-hop QoS parameter information 2 is satisfied, a set 2 of configuration parameters of the second configuration information is searched for from the second configuration table B, and so on; if hop-by-hop QoS parameter information n is satisfied, a set n of configuration parameters of the second configuration information is searched for from the second configuration table B; or if there is no end-to-end QoS parameter information that satisfies a condition, a default set of configuration parameters of the second configuration information corresponds.

In an implementation, a corresponding relationship between hop-by-hop QoS parameters and second configuration information may be further added in the second signaling and/or the third signaling, or the corresponding relationship is determined by the first device.

In another implementation, the second signaling and the third signaling may include a mapping relationship between the first configuration information and the second configuration information, so that the second configuration information may be determined with reference to the first configuration information. The mapping relationship between the first configuration information and the second configuration information may be expressed in a plurality of forms, and only the following two implementations are provided for illustration in the embodiment of this application.

In the first implementation, the second configuration information is determined based on an end-to-end sidelink bearer identifier. A relatively global end-to-end sidelink bearer identifier mechanism is set, that is, from different ways, such as system information block signaling, broadcast signaling, pre-configured signaling, a network side device, and a cell, corresponding end-to-end sidelink bearer identifiers need to be uniformly numbered, so as to ensure that a global end-to-end sidelink bearer identifier can be obtained, so that correct second configuration information can be found, and a mapping relationship between the first configuration information and the second configuration information can be directly obtained.

In the second implementation, the second configuration information is determined based on characteristics of the end-to-end sidelink bearer. For example, by using at least one of typical characteristics of an end-to-end sidelink bearer, such as a RLC transmission mode: acknowledged mode (Acknowledged Mode, AM) or an unacknowledged mode (Unacknowledged Mode, UM), MAC parameters, channel priority of the end-to-end sidelink bearer, and service delay parameters, second configuration information is determined, and a mapping relationship between the first configuration information and the second configuration information is obtained.

In the above embodiment, the QoS parameter information is taken as an example to determine the second configuration information, which is equivalent to determining a hop-by-hop sidelink bearer and mode based on the QoS parameter information. For example, if the reliability requirement for the QoS parameter information is high, the hop-by-hop sidelink bearer may be in a RLC AM mode. If the reliability requirement for the QoS parameter information is low, a RLC UM mode may be used. A hop-by-hop sidelink bearer corresponding to a high service priority in the QoS parameter information also has a high priority. On the contrary, a hop-by-hop sidelink bearer corresponding to a low priority in the QoS parameter information also has a low priority. When a guaranteed bit rate corresponding to QoS parameter information is x, a guaranteed bit rate corresponding to the hop-by-hop sidelink bearer also needs to be increased by x to carry the service.

For a newly added service flow, a hop-by-hop sidelink bearer that is found in the above manner may have been established (that is, another similar service or a similar service of another UE has triggered the establishment), then a newly added end-to-end sidelink bearer may be directly mapped to the existing hop-by-hop sidelink bearer, and necessary interface reconfiguration may be performed on the existing hop-by-hop sidelink bearer. Reconfiguration parameters include priority adjustment and/or an increase of a guaranteed bit rate (a new service flow rate is added on the basis of the original guaranteed bit rate, to form a new guaranteed bit rate), and the like.

A manner of segmenting QoS parameters that need to be segmented may be controlled by a network side device. For example, all information is reported to the network side device to wait for configuration by dedicated signaling of the network side device, or QoS parameter information of a current hop is searched for from broadcast signaling, system information block signaling or pre-configured signaling based on detailed QoS information. Alternatively, the QoS parameters that need segmenting may be left to a UE for implementation, that is, the UE obtains, from a network, fixed configuration parameters in the second configuration information derived from QoS information, and independently determines the segmentable configuration parameters, to form complete second configuration information.

With the above process, the first device obtains the second configuration information of the first communication, and then configures the second configuration information to the third device. Step S120 includes:
Step S920: The first device sends a third message to the third device, where the third message includes the second configuration information and/or a mapping relationship between the first configuration information and the second configuration information.

The third message may be sent by a sidelink radio resource control process.

The third device is a relay device in relay devices of the first communication that is connected to the first device.

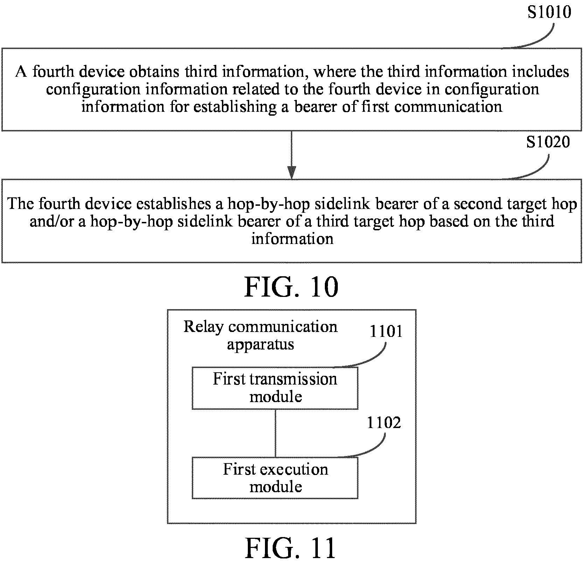

Based on the above embodiment, in an implementation, a configuration and/or maintenance process of the second configuration information is implemented by a relay device as follows. As shown in FIG. 10, the method includes the following steps.

S1010: The fourth device obtains third information, where the third information includes configuration information related to the fourth device in configuration information for establishing a bearer of first communication.

The fourth device is one of relay devices in the first communication.

The third information includes at least one of the following:
third configuration information, where the third configuration information is configuration information of the second target hop in the configuration information of the bearer, the second target hop is a hop between the fourth device and an upstream device, and the upstream device is a relay device or a first device of the first communication; and
fourth configuration information, where the fourth configuration information is configuration information of the third target hop in the configuration information of the bearer, the third target hop is a hop between the fourth device and a downstream device, and the downstream device is a relay device or a second device of the first communication.

In an implementation, step S1010 includes:
S1011: The fourth device receives a fourth message from the upstream device, where the fourth message includes the third configuration information.
S1012: The fourth device obtains the fourth configuration information based on the third configuration information, that is, the relay device may obtain configuration information of a next hop based on received configuration information of a previous hop.

For the same end-to-end service flow, different hops may use the same or different hop-by-hop configuration information during transmission through each hop, that is, for the fourth device, the same or different third configuration information and fourth configuration information may be used. For example, the use of the same hop-by-hop configuration information, that is, the same third configuration information and fourth configuration information, may be determined for end-to-end QoS parameter information corresponding to a PC5 QoS service flow.

Based on the above principle, in an implementation, after the first device obtains second configuration information, the first device may send the second configuration information to the third device corresponding to the first hop, and in the simplest manner, that is, a direct reuse manner, the second configuration information is directly adopted as hop-by-hop configuration information corresponding to the second hop and subsequent hops to configure a RLC Bearer of each hop. Similarly, for the fourth device, the third configuration information and the fourth configuration information are the same, and are both second configuration information.

In another implementation, configuration information of each hop may alternatively be adjusted based on actual requirements. Step S812 includes:
obtaining the fourth configuration information based on the third configuration information and/or related information of the third target hop in second information of the first communication, where the second information includes service-related information and/or link-related information of the first communication.

Specifically, configuration information of each hop may be adjusted based on QoS parameter information corresponding to each hop. For QoS parameters that need segmenting, QoS parameter information of a current hop may alternatively be determined by a relay device based on end-to-end QoS parameter information and QoS parameter information that has been allocated or occupied or remaining QoS parameter information except the QoS parameter information that has been allocated or occupied.

The fourth device may alternatively obtain the third information through signaling from a network side device based on a network state of the fourth device.

In an implementation, step S1010 includes:
The fourth device receives fourth signaling from a network side device in a case that the fourth device is in a radio resource control connected state, where the fourth signaling includes the third information.

In an implementation, before the receiving fourth signaling from a network side device, the method further includes:
The fourth device sends related information of the third target hop in second information of the first communication to the network side device, where the second information includes service-related information and/or link-related information of the first communication.

In another implementation, step S1010 includes:
The fourth device receives fifth signaling from a network side device in a case that the fourth device is in a radio resource control idle state or inactive state; and
the fourth device searches for the third information from the fifth signaling based on related information of the third target hop in second information of the first communication, where the second information includes service-related information and/or link-related information of the first communication.

In another implementation, step S1010 includes:
The fourth device searches for the third information from sixth signaling based on related information of the third target hop in second information of the first communication in a case that the fourth device is out of network coverage, where the second information includes service-related information and/or link-related information of the first communication.
S1020: The fourth device establishes a hop-by-hop sidelink bearer of a second target hop and/or a hop-by-hop sidelink bearer of a third target hop based on the third information.

In an implementation, step S 1020 includes:
The fourth device sends a fifth message to the downstream device, where the fifth message includes the fourth configuration information, and the fifth message may be sent by a sidelink radio resource control process. After receiving configuration information of a previous hop from an upstream device, each relay device may send the configuration information of the current hop to a downstream device by a PC5 RRC process.

The manner in which the fourth device obtains the third information based on the network state is similar to the manner in which the first device obtains the first information based on the network state in the above embodiment, and the repeated parts are not repeated herein.

From the technical solution of the above embodiment, it can be seen that in the embodiment of this application, the second configuration information is obtained and configured to the third device, to implement a configuration of a hop-by-hop sidelink bearer. Moreover, the hop-by-hop sidelink bearer can be matched based on different service scenarios and QoS parameter information, to transmit different service data on a U2U path or even a multi-hop U2U path, so as to guarantee and improve communication performance and system performance in reliability, throughput, and other aspects.

Based on the above embodiment, for the L3 U2U scenario, each hop may be considered as a complete protocol stack system.

In an implementation, end-to-end QoS parameter information may be segmented first, that is, segmented into QoS parameter information of each hop performed, such as QoS parameter information of the first hop (Hop1), QoS parameter information of the second hop (Hop2), ..., and QoS parameter information of the Nth hop (HopN).

The segmentation process of the above QoS parameter information may be performed by PC5-S or a Vehicle-to-Everything higher layer (Vchiclc-to-Evcrything higher layer, V2X higher layer).

Therefore, in the process of configuring a sidelink bearer in the L3 U2U scenario, each hop may be independently performed, which is decomposed into that configuration information of each hop is obtained based on QoS parameter information corresponding to the hop to implement a configuration of a sidelink bearer of the hop. For example, the Hop1 performs an SLRB and underlying configuration of the Hop1 based on QoS parameter information of the Hop1, the Hop2 performs an SLRB and underlying configuration of the Hop2 based on QoS parameter information of the Hop2, ..., and the HopN performs an SLRB and underlying configuration of the HopN based on QoS parameter information of the HopN. Configuration information of each hop may include configuration information of an SDAP layer, PDCP configuration information, RLC configuration information, MAC configuration information, PHY configuration information, and the like.

A configuration of each hop may be performed by the same process:
A configuration of a sidelink bearer of each hop is determined based on a sender device in the hop, and the process of the direct link in the above embodiment is reused as much as possible.

When the sender device is in a RRC connected state, by a method similar to steps S112 and S113, the sender device reports related information corresponding to each hop, such as QoS parameter information of each hop, to a network side device, and receives dedicated signaling of the network side device. The dedicated signaling includes configuration information of each hop.

When the sender device is in a RRC idle state or inactive state, by a method similar to steps S114 and S115, the sender device searches for configuration information of each hop from broadcast signaling or system message block signaling based on QoS parameter information of the hop.

When the sender device is OOC, the sender device searches for configuration information of each hop from pre-configured signaling based on QoS parameter information of the hop.

After obtaining configuration information of each hop, the sender device may send the configuration information to a peer device of the hop by a PC5 RRC process.

From the technical solution of the above embodiment, it can be seen that in the embodiment of this application, in the L3 U2U scenario, the QoS parameter information of each hop is segmented, and configuration information of the hop is obtained based on a network state according to the QoS parameter information of the hop, to implement a configuration of a sidelink bearer of the hop. Moreover, the sidelink bearer of each hop can be matched based on different QoS parameters, to transmit different service data on a U2U path or even a multi-hop U2U path, so as to guarantee and improve communication performance and system performance in reliability, throughput, and other aspects.

In the relay communication method according to the embodiment of this application, an executing subject may be a relay communication apparatus. A relay communication apparatus according to an embodiment of this application is described with an example in which the relay communication apparatus performs a relay communication method in the embodiment of this application.

As shown in FIG. 11, the relay communication apparatus includes: a first transmission module 1101 and a first execution module 1102.

The first transmission module 1101 is configured to obtain first information, where the first information includes configuration information for establishing a bearer of first communication. The first execution module 1102 is configured to establish, with a second device, the bearer of the first communication based on the first information, and communicate with the second device. The relay communication apparatus is one of a source terminal and a destination terminal of the first communication, and the second device is the other of the source terminal and the destination terminal of the first communication. The first communication is sidelink relay communication. The first information includes at least one of the following:

first configuration information, where the first configuration information is end-to-end configuration information in the configuration information of the bearer; and
second configuration information, where the second configuration information is hop-by-hop configuration information corresponding to a first target hop between the relay communication apparatus and a third device in the configuration information of the bearer, and the third device is a relay device connected to a first device in the first communication.

Optionally, the first communication is one of the following:
layer 2 sidelink relay communication; and
layer 3 sidelink relay communication.

Optionally, in a case that the first communication is the layer 2 sidelink relay communication, the second configuration information includes at least one of the following:
configuration information of a radio link control layer;
configuration information of a medium access control layer; and
configuration information of a physical layer.

Optionally, in a case that the first communication is the layer 3 sidelink relay communication, the second configuration information includes at least one of the following:
configuration information of a service data adaptation protocol layer;
configuration information of a packet data convergence protocol layer;
configuration information of a radio link control layer;
configuration information of a medium access control layer; and
configuration information of a physical layer.

Optionally, the relay communication apparatus is one of the following:
a service initiating end device of the sidelink relay communication;
a service flow sending end device of the sidelink relay communication;
a service flow receiving end device of the sidelink relay communication; and
one of the source terminal and the destination terminal of the sidelink relay communication.

As can be seen from the technical solution of the above embodiment, in the embodiment of this application, first information is obtained, where the first information includes configuration information for establishing a bearer of first communication; and the bearer of the first communication is established with a second device based on the first information, and communication therewith is performed, where the first information includes first configuration information for establishing an end-to-end sidelink bearer and/or second configuration information for establishing a hop-by-hop sidelink bearer. Therefore, a bearer configuration of sidelink relay communication can be quickly performed, to implement service data transmission on a U2U path or even a multi-hop U2U path.

Based on the above embodiment, optionally, the first transmission module 1101 is configured to receive a first message from a network side device, and obtain the first information based on the first message.

The first message includes at least one of the following:
the first configuration information and/or the second configuration information;
a configuration table, where the configuration table is used to search for the first configuration information and/or the second configuration information; and
a mapping relationship between the first configuration information and the second configuration information.

Optionally, the first transmission module 1101 is configured to receive first signaling from the network side device in a case of being in a radio resource control connected state, where the first signaling includes the first configuration information and/or the second configuration information.

Optionally, the first signaling may further include the mapping relationship between the first configuration information and the second configuration information.

Optionally, the first transmission module 1101 is further configured to send second information of the first communication to the network side device, where the second information includes service-related information and/or link-related information of the first communication.

Optionally, in a case of being in a radio resource control idle state or inactive state, the first transmission module 1101 is configured to:
receive second signaling from the network side device, where the second signaling includes the configuration table, and the configuration table includes a mapping relationship between the first information and second information; and
search for the first information from the configuration table based on the second information of the first communication, where the second information includes service-related information and/or link-related information of the first communication.

Optionally, the second signaling further includes the mapping relationship between the first configuration information and the second configuration information.

Optionally, in a case of being out of network coverage, the first transmission module 1101 is configured to:
obtain pre-configuration information from third signaling, where the pre-configuration information includes the configuration table, and the configuration table includes a mapping relationship between the first information and second information; and
search for the first information from the configuration table based on the second information of the first communication, where the second information includes service-related information and/or link-related information of the first communication.

Optionally, the third signaling further includes the mapping relationship between the first configuration information and the second configuration information.

Optionally, the service-related information of the first communication includes at least one of the following:
end-to-end QoS parameter information; and
hop-by-hop QoS parameter information.

Optionally, the hop-by-hop QoS parameter information includes at least one of the following:
QoS parameter information of a current hop;
QoS parameter information that has been allocated or occupied;
remaining QoS parameter information except the QoS parameter information that has been allocated or occupied; and
QoS segmentation information.

Optionally, the link-related information of the first communication includes at least one of the following:
first relay indication information used to indicate that layer 2 sidelink relay communication or layer 3 sidelink relay communication is used; and
hop-by-hop relay link information.
The hop-by-hop relay link information includes at least one of the following:
a total number of hops; and
a sequence number of a current hop.

Optionally, the first execution module 1102 is configured to perform at least one of the following:
searching for the first configuration information from the configuration table based on end-to-end related information in the second information;
searching for the second configuration information from the configuration table based on the end-to-end related information and/or hop-by-hop related information in the second information; and
searching for the second configuration information from the configuration table based on the end-to-end related information in the second information and/or the mapping relationship between the first configuration information and the second configuration information.

Optionally, the configuration table includes a first configuration table and a second configuration table, the first configuration table is used to search for the first configuration information, and the second configuration table is used to search for the second configuration information.

Optionally, the first execution module 1102 is configured for at least one of the following:

The first device sends a second message to the second device, where the second message includes the first configuration information, and the second message may be sent by a sidelink radio resource control process; and
the first device sends a third message to the third device, where the third message includes the second configuration information and/or a mapping relationship between the first configuration information and the second configuration information, and the third message may be sent by the sidelink radio resource control process.

The third device is a relay device in relay devices of the first communication that is connected to the first device.

From the technical solution of the above embodiment, it can be seen that in the embodiment of this application, the first configuration information and/or the second configuration information is obtained in different manners when the first device is in different network states, so that a bearer configuration of sidelink relay communication can be flexibly implemented.

The relay communication apparatus in the embodiment of this application may be an electronic device, such as an electronic device with an operating system, or a component in the electronic device, such as an integrated circuit or a chip. The electronic device may be a terminal or another device other than the terminal. For example, the terminal may include, but is not limited to, the types of the terminal 11 listed above, and the another device may be a server, a network attached storage (Network Attached Storage, NAS), or the like, which is not specifically limited in the embodiment of this application.

The relay communication apparatus according to the embodiment of this application can implement each process implemented in the method embodiments of FIG. 2 to FIG. 10, and achieve the same technical effect. To avoid repetition, details are not described herein.

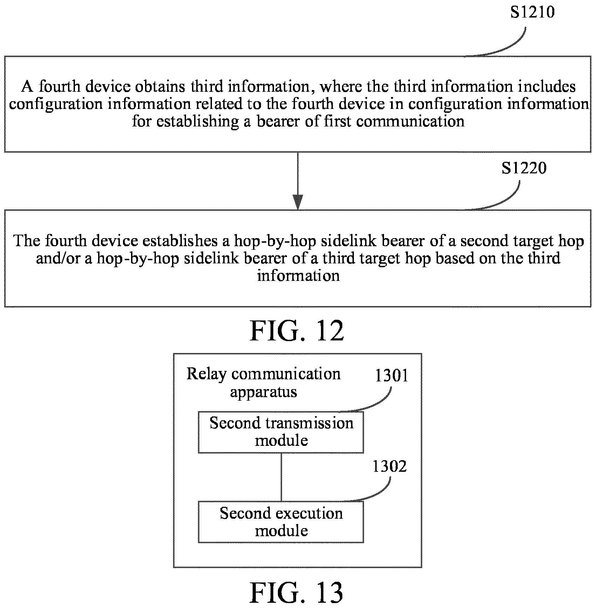

As shown in FIG. 12, an embodiment of this application further provides a relay communication method, and an executing body of the relay communication method is a fourth device. In other words, the method may be performed by software or hardware installed on the fourth device.

S1210: The fourth device obtains third information, where the third information includes configuration information related to the fourth device in configuration information for establishing a bearer of first communication.

S1220: The fourth device establishes a hop-by-hop sidelink bearer of a second target hop and/or a hop-by-hop sidelink bearer of a third target hop based on the third information.

The fourth device is one of relay devices in the first communication. The second target hop is a hop between the fourth device and an upstream device, and the third target hop is a hop between the fourth device and a downstream device. The upstream device is a relay device or a first device of the first communication, and the downstream device is a relay device or a second device of the first communication. The first device is one of a source terminal and a destination terminal of the first communication, and the second device is the other of the source terminal and the destination terminal of the first communication. The first communication is sidelink relay communication. The third information includes at least one of the following:
third configuration information, where the third configuration information is configuration information of the second target hop in the configuration information of the bearer; and
fourth configuration information, where the fourth configuration information is configuration information of the third target hop in the configuration information of the bearer.

Optionally, S1210 includes:
The fourth device receives a fourth message from the upstream device, where the fourth message includes the third configuration information; and
the fourth device obtains the fourth configuration information based on the third configuration information.

Optionally, the obtaining the fourth configuration information based on the third configuration information includes:
obtaining the fourth configuration information based on the third configuration information and/or related information of the third target hop in second information of the first communication, where the second information includes service-related information and/or link-related information of the first communication.

Optionally, S1210 includes:
The fourth device receives fourth signaling from a network side device in a case that the fourth device is in a radio resource control connected state, where the fourth signaling includes the third information.

Optionally, before the receiving fourth signaling from a network side device, the method further includes:
The fourth device sends related information of the third target hop in second information of the first communication to the network side device, where the second information includes service-related information and/or link-related information of the first communication.

Optionally, S1210 includes:
The fourth device receives fifth signaling from a network side device in a case that the fourth device is in a radio resource control idle state or inactive state; and
the fourth device searches for the third information from the fifth signaling based on related information of the third target hop in second information of the first communication, where the second information includes service-related information and/or link-related information of the first communication.

Optionally, S1210 includes:
The fourth device searches for the third information from sixth signaling based on related information of the third target hop in second information of the first communication in a case that the fourth device is out of network coverage, where the second information includes service-related information and/or link-related information of the first communication.

Optionally, before that the fourth device obtains third information, the method further includes:
The fourth device obtains the related information of the third target hop in the second information of the first communication from the upstream device.

Optionally, S 1220 includes:
The fourth device sends a fifth message to the downstream device, where the fifth message includes the fourth configuration information.

Optionally, the first communication is one of the following:
layer 2 sidelink relay communication; and
layer 3 sidelink relay communication.

Optionally, in a case that the first communication is the layer 2 sidelink relay communication, the third configuration information and the fourth configuration information each include at least one of the following:
configuration information of a radio link control layer;
configuration information of a medium access control layer; and
configuration information of a physical layer.

Optionally, in a case that the first communication is the layer 3 sidelink relay communication, the third configuration information and the fourth configuration information each include at least one of the following:
configuration information of a service data adaptation protocol layer;
configuration information of a packet data convergence protocol layer;
configuration information of a radio link control layer;
configuration information of a medium access control layer; and
configuration information of a physical layer.
Steps S1210 to S1220 can implement the method embodiment shown in FIG. 10 and achieve the same technical effect, and the repeated parts are not repeated herein.

From the technical solution of the above embodiment, it can be seen that in the embodiment of this application, the third information is obtained, where the third information includes the configuration information related to the fourth device in the configuration information for establishing the bearer of the first communication, and the hop-by-hop sidelink bearer of the second target hop and/or the hop-by-hop sidelink bearer of the third target hop is established based on the third information, to implement a configuration of a hop-by-hop sidelink bearer. Moreover, the hop-by-hop sidelink bearer can be matched based on different service scenarios and QoS parameter information, to transmit different service data on a U2U path or even a multi-hop U2U path, so as to guarantee and improve communication performance and system performance in reliability, throughput, and other aspects.

In the relay communication method according to the embodiment of this application, an executing subject may be a relay communication apparatus. A relay communication apparatus according to an embodiment of this application is described with an example in which the relay communication apparatus performs a relay communication method in the embodiment of this application.

As shown in FIG. 13, the relay communication apparatus includes: a second transmission module 1301 and a second execution module 1302.

The second transmission module 1301 is configured to obtain third information, where the third information includes configuration information related to the relay communication apparatus in configuration information for establishing a bearer of first communication. The second execution module 1302 is configured to establish a hop-by-hop sidelink bearer of a second target hop and/or a hop-by-hop sidelink bearer of a third target hop based on the third information.

The relay communication apparatus is one of relay devices in the first communication. The second target hop is a hop between the relay communication apparatus and an upstream device, and the third target hop is a hop between the relay communication apparatus and a downstream device. The upstream device is a relay device or a first device of the first communication, and the downstream device is a relay device or a second device of the first communication. The first device is one of a source terminal and a destination terminal of the first communication, and the second device is the other of the source terminal and the destination terminal of the first communication. The first communication is sidelink relay communication. The third information includes at least one of the following:
third configuration information, where the third configuration information is configuration information of the second target hop in the configuration information of the bearer; and
fourth configuration information, where the fourth configuration information is configuration information of the third target hop in the configuration information of the bearer.

Optionally, the second transmission module 1301 is configured to
receive a fourth message from the upstream device, where the fourth message includes the third configuration information; and
obtain the fourth configuration information based on the third configuration information.

Optionally, the second transmission module 1301 is configured to obtain the fourth configuration information based on the third configuration information and/or related information of the third target hop in second information of the first communication, where the second information includes service-related information and/or link-related information of the first communication.

Optionally, the second transmission module 1301 is configured to receive fourth signaling from a network side device in a case of being in a radio resource control connected state, where the fourth signaling includes the third information.

Optionally, the second transmission module 1301 is further configured to send related information of the third target hop in second information of the first communication to the network side device, where the second information includes service-related information and/or link-related information of the first communication.

Optionally, the second transmission module 1301 is configured to
receive fifth signaling from a network side device in a case of being in a radio resource control idle state or inactive state; and
search for the third information from the fifth signaling based on related information of the third target hop in second information of the first communication, where the second information includes service-related information and/or link-related information of the first communication.

Optionally, the second transmission module 1301 is configured to search for the third information from sixth signaling based on related information of the third target hop in second information of the first communication in a case of being out of network coverage, where the second information includes service-related information and/or link-related information of the first communication.

Optionally, the second transmission module 1301 is further configured to obtain the related information of the third target hop in the second information of the first communication from the upstream device.

Optionally, the second execution module 1302 is configured to send a fifth message to the downstream device. The fifth message includes the fourth configuration information.

Optionally, the first communication is one of the following:
layer 2 sidelink relay communication; and
layer 3 sidelink relay communication.

Optionally, in a case that the first communication is the layer 2 sidelink relay communication, the third configuration information and the fourth configuration information each include at least one of the following:
configuration information of a radio link control layer;
configuration information of a medium access control layer; and
configuration information of a physical layer.

Optionally, in a case that the first communication is the layer 3 sidelink relay communication, the third configuration information and the fourth configuration information each include at least one of the following:
configuration information of a service data adaptation protocol layer;
configuration information of a packet data convergence protocol layer;
configuration information of a radio link control layer;
configuration information of a medium access control layer; and
configuration information of a physical layer.

From the technical solution of the above embodiment, it can be seen that in the embodiment of this application, the third information is obtained, where the third information includes the configuration information related to the relay communication apparatus in the configuration information for establishing the bearer of the first communication, and the hop-by-hop sidelink bearer of the second target hop and/or the hop-by-hop sidelink bearer of the third target hop is established based on the third information, to implement a configuration of a hop-by-hop sidelink bearer. Moreover, the hop-by-hop sidelink bearer can be matched based on different service scenarios and QoS parameter information, to transmit different service data on a U2U path or even a multi-hop U2U path, so as to guarantee and improve communication performance and system performance in reliability, throughput, and other aspects.

The relay communication apparatus in the embodiment of this application may be an electronic device, such as an electronic device with an operating system, or a component in the electronic device, such as an integrated circuit or a chip. The electronic device may be a terminal or another device other than the terminal. For example, the terminal may include, but is not limited to, the types of the terminal 11 listed above, and the another device may be a server, a network attached storage (Network Attached Storage, NAS), or the like, which is not specifically limited in the embodiment of this application.

The relay communication apparatus according to the embodiment of this application can implement each process implemented in the method embodiment of FIG. 12, and achieve the same technical effect. To avoid repetition, details are not described herein.

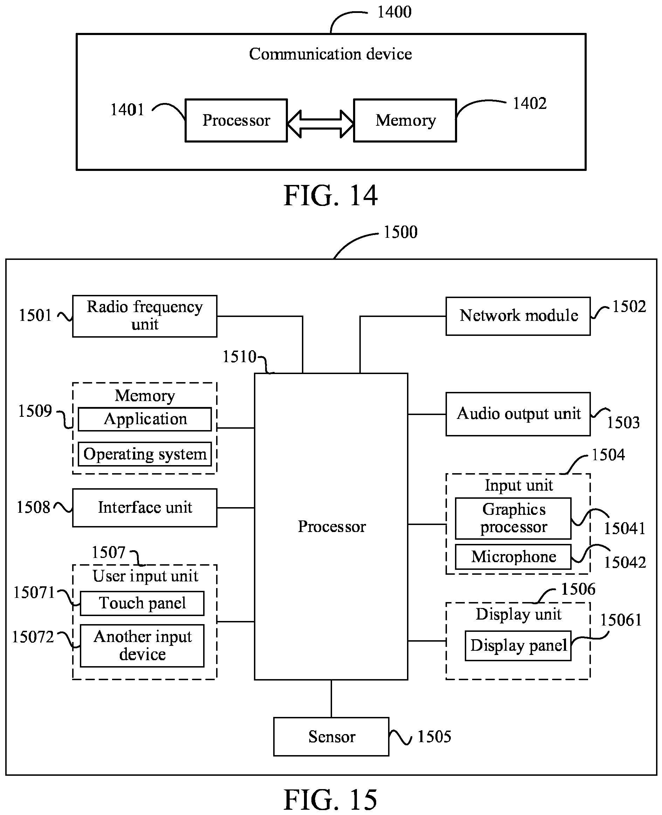

Optionally, as shown in FIG. 14, an embodiment of this application further provides a communication device 1400, including a processor 1401 and a memory 1402. The memory 1402 stores a program or instructions that can run on the processor 1401. For example, when the communication device 1400 is a terminal, and the program or instructions, when executed by the processor 1401, implement each step of the above-mentioned relay communication method embodiment, which can achieve the same technical effect. When the communication device 1400 is a network side device, the program or instructions, when executed by the processor 1401, implement each step of the above-mentioned relay communication method embodiment, which can achieve the same technical effect. To avoid repetition, details are not described herein.

An embodiment of this application further provides a terminal, including a processor and a communication interface. The processor is configured to establish, with a second device, a bearer of first communication based on first information, and communicate with the second device, and the communication interface is configured to obtain the first information. The first information includes configuration information for establishing the bearer of the first communication. The terminal embodiment corresponds to the above-mentioned terminal side method embodiment, and each implementation process and implementation of the above-mentioned method embodiment can be applied to the terminal embodiment, which can achieve the same technical effect. Specifically, FIG. 15 is a schematic diagram of a hardware structure of a terminal according to an embodiment of this application.

The terminal 1500 includes, but is not limited to, at least some components of a radio frequency unit 1501, a network module 1502, an audio output unit 1503, an input unit 1504, a sensor 1505, a display unit 1506, a user input unit 1507, an interface unit 1508, a memory 1509, and a processor 1510.

It can be understood by a person skilled in the art that the terminal 1500 may further include a power supply (such as a battery) for supplying power to various components. The power supply may be logically connected to the processor 1510 by a power management system, so as to achieve charging, discharging, power consumption management and other functions by the power management system. The terminal structure shown in FIG. 15 does not constitute a limitation to the terminal. The terminal may include more or fewer components than those shown, or combine some components, or have different component arrangements. Details are not described herein.

It should be understood that in the embodiment of this application, the input unit 1504 may include a graphics processing unit (Graphics Processing Unit, GPU) 15041 and a microphone 15042. The GPU 15041 processes image data of a static image or video that is obtained by an image acquisition apparatus (for example, a camera) in a video acquisition mode or an image acquisition mode. The display unit 1506 may include a display panel 15061, and the display panel 15061 may be configured in the form of a liquid crystal display, an organic light emitting diode, or the like. The user input unit 1507 includes at least one of a touch panel 15071 and another input device 15072. The touch panel 15071 is also referred to as a touchscreen. The touch panel 15071 may include two parts: a touch detection apparatus and a touch controller. The another input device 15072 may include, but is not limited to, a physical keyboard, a functional key (such as a volume control key or a switch key), a track ball, a mouse, and a joystick, which is not described in detail herein.

In the embodiment of this application, after receiving downlink data from a network side device, the radio frequency unit 1501 may transmit the data to the processor 1510 for processing. In addition, the radio frequency unit 1501 may send uplink data to the network side device. Generally, the radio frequency unit 1501 includes, but is not limited to, an antenna, an amplifier, a transceiver, a coupler, a low noise amplifier, and a duplexer.

The memory 1509 may be configured to store a software program or instructions and various data. The memory 1509 may mainly include a first storage area for storing a program or instructions and a second storage area for storing data, where the first storage area may store an operating system, an application or instructions required for at least a function (such as a sound playing function and an image playing function), and the like. In addition, the memory 1509 may include a volatile memory or a non-volatile memory, or the memory 1509 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct Rambus random access memory (Direct Rambus RAM, DRRAM). The memory 1509 in the embodiment of this application includes, but is not limited to, these and any other suitable types of memories.

The processor 1510 may include one or more processing units. Optionally, the processor 1510 integrates an application processor and a modem processor, where the application processor mainly deals with operations involving an operating system, a user interface, an application program, and the like, and the modem processor mainly processes wireless communication signals, such as a baseband processor. It can be understood that, the modem processor may not be integrated into the processor 1510.

The radio frequency unit 1501 is configured to obtain first information, where the first information includes configuration information for establishing a bearer of first communication.

The processor 1510 is configured to establish, with a second device, the bearer of the first communication based on the first information, and communicate with the second device. The relay communication apparatus is one of a source terminal and a destination terminal of the first communication, and the second device is the other of the source terminal and the destination terminal of the first communication. The first communication is sidelink relay communication. The first information includes at least one of the following:
first configuration information, where the first configuration information is end-to-end configuration information in the configuration information of the bearer; and
second configuration information, where the second configuration information is hop-by-hop configuration information corresponding to a first target hop between the relay communication apparatus and a third device in the configuration information of the bearer, and the third device is a relay device connected to a first device in the first communication.

Optionally, the first communication is one of the following:
layer 2 sidelink relay communication; and
layer 3 sidelink relay communication.

Optionally, in a case that the first communication is the layer 2 sidelink relay communication, the second configuration information includes at least one of the following:
configuration information of a radio link control layer;
configuration information of a medium access control layer; and
configuration information of a physical layer.

Optionally, in a case that the first communication is the layer 3 sidelink relay communication, the second configuration information includes at least one of the following:
configuration information of a service data adaptation protocol layer;
configuration information of a packet data convergence protocol layer;
configuration information of a radio link control layer;
configuration information of a medium access control layer; and
configuration information of a physical layer.

Optionally, the relay communication apparatus is one of the following:
a service initiating end device of the sidelink relay communication;
a service flow sending end device of the sidelink relay communication;
a service flow receiving end device of the sidelink relay communication; and
one of the source terminal and the destination terminal of the sidelink relay communication.

According to the embodiment of this application, the configuration of the bearer of the sidelink relay communication can be quickly performed, so as to implement service data transmission on a U2U path or even a multi-hop U2U path.

Based on the above embodiment, optionally, the radio frequency unit 1501 is configured to receive a first message from a network side device, and obtain the first information based on the first message.

The first message includes at least one of the following:
the first configuration information and/or the second configuration information;
a configuration table, where the configuration table is used to search for the first configuration information and/or the second configuration information; and
a mapping relationship between the first configuration information and the second configuration information.

Optionally, the radio frequency unit 1501 is configured to receive first signaling from the network side device in a case of being in a radio resource control connected state, where the first signaling includes the first configuration information and/or the second configuration information.

Optionally, the first signaling may further include the mapping relationship between the first configuration information and the second configuration information.

Optionally, the radio frequency unit 1501 is further configured to send second information of the first communication to the network side device, where the second information includes service-related information and/or link-related information of the first communication.

Optionally, in a case of being in a radio resource control idle state or inactive state, the radio frequency unit 1501 is configured to:
receive second signaling from the network side device, where the second signaling includes the configuration table, and the configuration table includes a mapping relationship between the first information and second information; and
search for the first information from the configuration table based on the second information of the first communication, where the second information includes service-related information and/or link-related information of the first communication.

Optionally, the second signaling further includes the mapping relationship between the first configuration information and the second configuration information.

Optionally, in a case of being out of network coverage, the radio frequency unit 1501 is configured to:
obtain pre-configuration information from third signaling, where the pre-configuration information includes the configuration table, and the configuration table includes a mapping relationship between the first information and second information; and
search for the first information from the configuration table based on the second information of the first communication, where the second information includes service-related information and/or link-related information of the first communication.

Optionally, the third signaling further includes the mapping relationship between the first configuration information and the second configuration information.

Optionally, the service-related information of the first communication includes at least one of the following:
end-to-end QoS parameter information; and
hop-by-hop QoS parameter information.

Optionally, the hop-by-hop QoS parameter information includes at least one of the following:
QoS parameter information of a current hop;
QoS parameter information that has been allocated or occupied;
remaining QoS parameter information except the QoS parameter information that has been allocated or occupied; and
QoS segmentation information.

Optionally, the link-related information of the first communication includes at least one of the following:
first relay indication information used to indicate that layer 2 sidelink relay communication or layer 3 sidelink relay communication is used; and
hop-by-hop relay link information.
The hop-by-hop relay link information includes at least one of the following:
a total number of hops; and
a sequence number of a current hop.

Optionally, the processor 1510 is configured to perform at least one of the following:
searching for the first configuration information from the configuration table based on end-to-end related information in the second information;
searching for the second configuration information from the configuration table based on the end-to-end related information and/or hop-by-hop related information in the second information; and
searching for the second configuration information from the configuration table based on the end-to-end related information in the second information and/or the mapping relationship between the first configuration information and the second configuration information.

Optionally, the configuration table includes a first configuration table and a second configuration table, where the first configuration table is used to search for the first configuration information, and the second configuration table is used to search for the second configuration information.

Optionally, the processor 1510 is configured for at least one of the following:
The first device sends a second message to the second device, where the second message includes the first configuration information; and
the first device sends a third message to the third device, where the third message includes the second configuration information and/or a mapping relationship between the first configuration information and the second configuration information.

The third device is a relay device in relay devices of the first communication that is connected to the first device.

According to the embodiment of this application, the configuration of the bearer of the sidelink relay communication can be flexibly implemented.

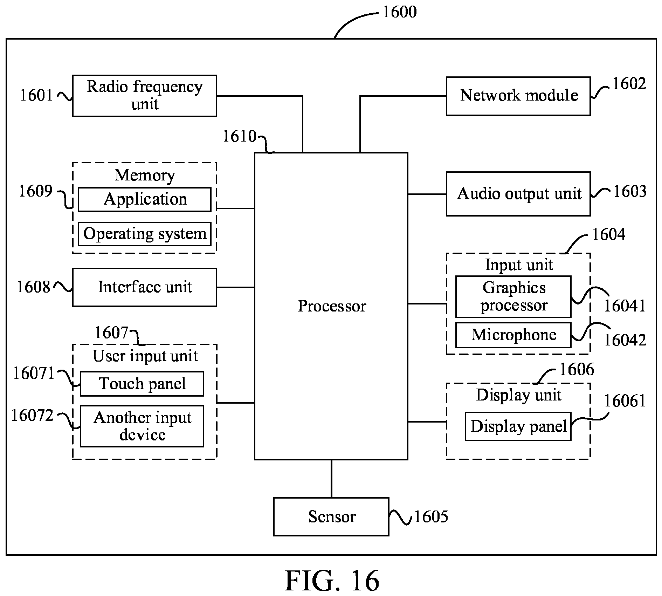

An embodiment of this application further provides a terminal, including a processor and a communication interface. The processor is configured to establish a hop-by-hop sidelink bearer of a second target hop and/or a hop-by-hop sidelink bearer of a third target hop based on third information, and the communication interface is configured to obtain the third information. The third information includes configuration information related to the relay communication apparatus in configuration information for establishing a bearer of first communication. The terminal embodiment corresponds to the above-mentioned terminal side method embodiment, and each implementation process and implementation of the above-mentioned method embodiment can be applied to the terminal embodiment, which can achieve the same technical effect. Specifically, FIG. 16 is a schematic diagram of a hardware structure of a terminal according to an embodiment of this application.

The terminal 1600 includes, but is not limited to, at least some components of a radio frequency unit 1601, a network module 1602, an audio output unit 1603, an input unit 1604, a sensor 1605, a display unit 1606, a user input unit 1607, an interface unit 1608, a memory 1609, and a processor 1610.

It can be understood by a person skilled in the art that the terminal 1600 may further include a power supply (such as a battery) for supplying power to various components. The power supply may be logically connected to the processor 1610 by a power management system, so as to achieve charging, discharging, power consumption management and other functions by the power management system. The terminal structure shown in FIG. 16 does not constitute a limitation to the terminal. The terminal may include more or fewer components than those shown, or combine some components, or have different component arrangements. Details are not described herein.

It should be understood that in the embodiment of this application, the input unit 1604 may include a graphics processing unit (Graphics Processing Unit, GPU) 16041 and a microphone 16042. The GPU 16041 processes image data of a static image or video that is obtained by an image acquisition apparatus (for example, a camera) in a video acquisition mode or an image acquisition mode. The display unit 1606 may include a display panel 16061, and the display panel 16061 may be configured in the form of a liquid crystal display, an organic light emitting diode, or the like. The user input unit 1607 includes at least one of a touch panel 16071 and another input device 16072. The touch panel 16071 is also referred to as a touchscreen. The touch panel 16071 may include two parts: a touch detection apparatus and a touch controller. The another input device 16072 may include, but is not limited to, a physical keyboard, a functional key (such as a volume control key or a switch key), a track ball, a mouse, and a joystick, which is not described in detail herein.

In the embodiment of this application, after receiving downlink data from a network side device, the radio frequency unit 1601 may transmit the data to the processor 1610 for processing. In addition, the radio frequency unit 1601 may send uplink data to the network side device. Generally, the radio frequency unit 1601 includes, but is not limited to, an antenna, an amplifier, a transceiver, a coupler, a low noise amplifier, and a duplexer.

The memory 1609 may be configured to store a software program or instructions and various data. The memory 1609 may mainly include a first storage area for storing a program or instructions and a second storage area for storing data, where the first storage area may store an operating system, an application or instructions required for at least a function (such as a sound playing function and an image playing function), and the like. In addition, the memory 1609 may include a volatile memory or a non-volatile memory, or the memory 1609 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct Rambus random access memory (Direct Rambus RAM, DRRAM). The memory 1609 in the embodiment of this application includes, but is not limited to, these and any other suitable types of memories.

The processor 1610 may include one or more processing units. Optionally, the processor 1610 integrates an application processor and a modem processor, where the application processor mainly deals with operations involving an operating system, a user interface, an application program, and the like, and the modem processor mainly processes wireless communication signals, such as a baseband processor. It can be understood that, the modem processor may not be integrated into the processor 1610.

The radio frequency unit 1601 is configured to obtain third information, where the third information includes configuration information related to the relay communication apparatus in configuration information for establishing a bearer of first communication.

The processor 1610 is configured to establish a hop-by-hop sidelink bearer of a second target hop and/or a hop-by-hop sidelink bearer of a third target hop based on the third information.

The relay communication apparatus is one of relay devices in the first communication. The second target hop is a hop between the relay communication apparatus and an upstream device, and the third target hop is a hop between the relay communication apparatus and a downstream device. The upstream device is a relay device or a first device of the first communication, and the downstream device is a relay device or a second device of the first communication. The first device is one of a source terminal and a destination terminal of the first communication, and the second device is the other of the source terminal and the destination terminal of the first communication. The first communication is sidelink relay communication. The third information includes at least one of the following:
third configuration information, where the third configuration information is configuration information of the second target hop in the configuration information of the bearer; and
fourth configuration information, where the fourth configuration information is configuration information of the third target hop in the configuration information of the bearer.

Optionally, the radio frequency unit 1601 is configured to
receive a fourth message from the upstream device, where the fourth message includes the third configuration information; and
obtain the fourth configuration information based on the third configuration information.

Optionally, the radio frequency unit 1601 is configured to obtain the fourth configuration information based on the third configuration information and/or related information of the third target hop in second information of the first communication, where the second information includes service-related information and/or link-related information of the first communication.

Optionally, the radio frequency unit 1601 is configured to receive fourth signaling from a network side device in a case of being in a radio resource control connected state, where the fourth signaling includes the third information.

Optionally, the radio frequency unit 1601 is further configured to send related information of the third target hop in second information of the first communication to the network side device, where the second information includes service-related information and/or link-related information of the first communication.

Optionally, the radio frequency unit 1601 is configured to
receive fifth signaling from a network side device in a case of being in a radio resource control idle state or inactive state; and
search for the third information from the fifth signaling based on related information of the third target hop in second information of the first communication, where the second information includes service-related information and/or link-related information of the first communication.

Optionally, the second transmission module 1301 is configured to search for the third information from sixth signaling based on related information of the third target hop in second information of the first communication in a case of being out of network coverage, where the second information includes service-related information and/or link-related information of the first communication.

Optionally, the radio frequency unit 1601 is further configured to obtain the related information of the third target hop in the second information of the first communication from the upstream device.

Optionally, the processor 1610 is configured to send a fifth message to the downstream device, where the fifth message includes the fourth configuration information.

Optionally, the first communication is one of the following:
layer 2 sidelink relay communication; and
layer 3 sidelink relay communication.

Optionally, in a case that the first communication is the layer 2 sidelink relay communication, the third configuration information and the fourth configuration information each include at least one of the following:
configuration information of a radio link control layer;
configuration information of a medium access control layer; and
configuration information of a physical layer.

Optionally, in a case that the first communication is the layer 3 sidelink relay communication, the third configuration information and the fourth configuration information each include at least one of the following:
configuration information of a service data adaptation protocol layer;
configuration information of a packet data convergence protocol layer;
configuration information of a radio link control layer;
configuration information of a medium access control layer; and
configuration information of a physical layer.

In the embodiment of this application, a hop-by-hop sidelink bearer can be matched based on different service scenarios and QoS parameter information, to transmit different service data on a U2U path or even a multi-hop U2U path, so as to guarantee and improve communication performance and system performance in reliability, throughput, and other aspects.

An embodiment of this application further provides a readable storage medium. A program or instructions are stored on the readable storage medium. The program or instructions, when executed by a processor, implement each process of the above-mentioned relay communication method embodiment, which can achieve the same technical effect. To avoid repetition, details are not described herein.

The processor is the processor in the terminal in the above embodiment. The readable storage medium includes a computer-readable storage medium, such as computer read-only memory ROM, a random access memory RAM, a magnetic disk, a compact disc, or the like.

An embodiment of this application further provides a chip. The chip includes a processor and a communication interface. The communication interface is coupled to the processor, and the processor is configured to run a program or instructions to implement each process of the above-mentioned relay communication method embodiment, which can achieve the same technical effect. To avoid repetition, details are not described herein.

It should be understood that the chip mentioned in the embodiment of this application may be also referred to as a system-on-a-chip, a system on a chip, a system-on-chip, a system on chip, or the like.

An embodiment of this application further provides a computer program/program product. The computer program/program product is stored on a storage medium. The computer program/program product is executed by at least one processor to implement each process of the above-mentioned relay communication method embodiment, which can achieve the same technical effect. To avoid repetition, details are not described herein.

An embodiment of this application further provides a relay communication system, including: a first device and a fourth device. The first device may be configured to perform the steps of the relay communication method as described above, and the fourth device may be configured to perform the steps of the relay communication method as described above.

It should be noted that herein, terms "including", "comprising" or any other variants thereof arc intended to cover non-exclusive inclusion, so that a process, method, article or apparatus including a series of elements includes not only those elements but also other elements not explicitly listed, or elements inherent to such a process, method, article or apparatus. Without further limitation, an element defined by the phrase "including a ..." does not exclude the presence of an additional identical element in the process, method, article or apparatus including the element. In addition, it should be noted that the scope of the method and apparatus in the implementations of this application is not limited to performing functions in the order shown or discussed, but also may include performing functions in a substantially simultaneous manner or in a reverse order based on the functions involved. For example, the described method may be performed in an order different from that described, and various steps may be further added, omitted or combined. In addition, features described with reference to some examples can be combined in other examples.

By the description of the above implementations, a person skilled in the art can clearly understand that the method in the foregoing embodiments may be implemented by software and a necessary general-purpose hardware platform, or certainly, by hardware, but the former is a better implementation in many cases. Based on this understanding, the technical solution of this application essentially, or a part contributing to the prior art, may be embodied in a form of a computer software product. The computer software product is stored on a storage medium (for example, an ROM/RAM, a magnetic disk and a compact disc), and includes a plurality of instructions to cause a terminal (which may be a mobile phone, a computer, a server, an air-conditioner, a network device, or the like) to perform the method according to each embodiment of this application.

The embodiments of this application are described above with reference to the accompanying drawings, but this application is not limited to the specific implementations described above, and the specific implementations described above are merely illustrative and not restrictive. A person of ordinary skill in the art may further make many forms under the teaching of this application without departing from the purpose of this application and the protection scope of the claims, and these forms all fall within the protection scope of this application.

## Claims

1. A relay communication method, comprising:
obtaining, by a first device, first information, wherein the first information comprises configuration information for establishing a bearer of first communication; and
establishing, by the first device and with a second device, the bearer of the first communication based on the first information, and communicating with the second device,
wherein the first device is one of a source terminal and a destination terminal of the first communication, the second device is the other of the source terminal and the destination terminal of the first communication, the first communication is sidelink relay communication, and the first information comprises at least one of the following:
first configuration information, wherein the first configuration information is end-to-end configuration information in the configuration information of the bearer; and
second configuration information, wherein the second configuration information is hop-by-hop configuration information corresponding to a first target hop between the first device and a third device in the configuration information of the bearer, and the third device is a relay device connected to the first device in the first communication.

2. The method according to claim 1, wherein the obtaining, by a first device, first information comprises:
receiving, by the first device, a first message from a network side device, and obtaining the first information based on the first message,
wherein the first message comprises at least one of the following:
the first configuration information and/or the second configuration information;
a configuration table, wherein the configuration table is used to search for the first configuration information and/or the second configuration information; and
a mapping relationship between the first configuration information and the second configuration information.

3. The method according to claim 2, wherein the receiving, by the first device, a first message from a network side device, and obtaining the first information based on the first message comprises:
receiving, by the first device, first signaling from the network side device in a case that the first device is in a radio resource control connected state, wherein the first signaling comprises the first configuration information and/or the second configuration information.

4. The method according to claim 3, wherein the first signaling further comprises the mapping relationship between the first configuration information and the second configuration information.

5. The method according to claim 3, wherein before the receiving first signaling from the network side device, the method further comprises:
sending, by the first device, second information of the first communication to the network side device, wherein the second information comprises service-related information and/or link-related information of the first communication.

6. The method according to claim 2, wherein the receiving, by the first device, a first message from a network side device, and obtaining the first information based on the first message comprises:
receiving, by the first device, second signaling from the network side device in a case that the first device is in a radio resource control idle state or inactive state, wherein the second signaling comprises the configuration table, and the configuration table comprises a mapping relationship between the first information and second information; and
searching for, by the first device, the first information from the configuration table based on the second information of the first communication, wherein the second information comprises service-related information and/or link-related information of the first communication.

7. The method according to claim 6, wherein the second signaling further comprises the mapping relationship between the first configuration information and the second configuration information.

8. The method according to claim 2, wherein the receiving, by the first device, a first message from a network side device, and obtaining the first information based on the first message comprises:
obtaining, by the first device, pre-configuration information from third signaling in a case that the first device is out of network coverage, wherein the pre-configuration information comprises the configuration table, and the configuration table comprises a mapping relationship between the first information and second information; and
searching for, by the first device, the first information from the configuration table based on the second information of the first communication, wherein the second information comprises service-related information and/or link-related information of the first communication.

9. The method according to claim 8, wherein the third signaling further comprises the mapping relationship between the first configuration information and the second configuration information.

10. The method according to claim 5, 6, or 8, wherein the service-related information of the first communication comprises at least one of the following:
end-to-end QoS parameter information; and
hop-by-hop QoS parameter information.

11. The method according to claim 10, wherein the hop-by-hop QoS parameter information comprises at least one of the following:
QoS parameter information of a current hop;
QoS parameter information that has been allocated or occupied;
remaining QoS parameter information except the QoS parameter information that has been allocated or occupied; and
QoS segmentation information.

12. The method according to any one of claims 4 to 6, wherein the link-related information of the first communication comprises at least one of the following:
first relay indication information used to indicate that layer 2 sidelink relay communication or layer 3 sidelink relay communication is used; and
hop-by-hop relay link information,
wherein the hop-by-hop relay link information comprises at least one of the following:
a total number of hops; and
a sequence number of a current hop.

13. The method according to claim 6 or 8, wherein the searching for, by the first device, the first information from the configuration table based on the second information of the first communication comprises at least one of the following:
searching for, by the first device, the first configuration information from the configuration table based on end-to-end related information in the second information;
searching for, by the first device, the second configuration information from the configuration table based on the end-to-end related information and/or hop-by-hop related information in the second information; and
searching for, by the first device, the second configuration information from the configuration table based on the end-to-end related information in the second information and/or the mapping relationship between the first configuration information and the second configuration information.

14. The method according to claim 13, wherein the configuration table comprises a first configuration table and a second configuration table, the first configuration table is used to search for the first configuration information, and the second configuration table is used to search for the second configuration information.

15. The method according to claim 1, wherein the establishing, by the first device and with a second device, the bearer of the first communication based on the first information comprises at least one of the following:
sending, by the first device, a second message to the second device, wherein the second message comprises the first configuration information; and
sending, by the first device, a third message to the third device, wherein the third message comprises the second configuration information and/or a mapping relationship between the first configuration information and the second configuration information,
wherein the third device is a relay device in relay devices of the first communication that is connected to the first device.

16. The method according to claim 1, wherein the first communication is one of the following:
layer 2 sidelink relay communication; and
layer 3 sidelink relay communication.

17. The method according to claim 16, wherein in a case that the first communication is the layer 2 sidelink relay communication, the second configuration information comprises at least one of the following:
configuration information of a radio link control layer;
configuration information of a medium access control layer; and
configuration information of a physical layer.

18. The method according to claim 16, wherein in a case that the first communication is the layer 3 sidelink relay communication, the second configuration information comprises at least one of the following:
configuration information of a service data adaptation protocol layer;
configuration information of a packet data convergence protocol layer;
configuration information of a radio link control layer;
configuration information of a medium access control layer; and
configuration information of a physical layer.

19. The method according to claim 1, wherein the first device is one of the following:
a service initiating end device of the sidelink relay communication;
a service flow sending end device of the sidelink relay communication;
a service flow receiving end device of the sidelink relay communication; and
one of the source terminal and the destination terminal of the sidelink relay communication.

20. A relay communication apparatus, comprising:
a first transmission module, configured to obtain first information, wherein the first information comprises configuration information for establishing a bearer of first communication; and
a first execution module, configured to establish, with a second device, the bearer of the first communication based on the first information, and communicate with the second device,
wherein the relay communication apparatus is one of a source terminal and a destination terminal of the first communication, the second device is the other of the source terminal and the destination terminal of the first communication, the first communication is sidelink relay communication, and the first information comprises at least one of the following:
first configuration information, wherein the first configuration information is end-to-end configuration information in the configuration information of the bearer; and
second configuration information, wherein the second configuration information is hop-by-hop configuration information corresponding to a first target hop between the relay communication apparatus and a third device in the configuration information of the bearer, and the third device is a relay device connected to the first device in the first communication.

21. A relay communication method, comprising:
obtaining, by a fourth device, third information, wherein the third information comprises configuration information related to the fourth device in configuration information for establishing a bearer of first communication; and
establishing, by the fourth device, a hop-by-hop sidelink bearer of a second target hop and/or a hop-by-hop sidelink bearer of a third target hop based on the third information,
wherein the fourth device is one of relay devices in the first communication, the second target hop is a hop between the fourth device and an upstream device, the third target hop is a hop between the fourth device and a downstream device, the upstream device is a relay device or a first device of the first communication, the downstream device is a relay device or a second device of the first communication, the first device is one of a source terminal and a destination terminal of the first communication, the second device is the other of the source terminal and the destination terminal of the first communication, the first communication is sidelink relay communication, and the third information comprises at least one of the following:
third configuration information, wherein the third configuration information is configuration information of the second target hop in the configuration information of the bearer; and
fourth configuration information, wherein the fourth configuration information is configuration information of the third target hop in the configuration information of the bearer.

22. The method according to claim 21, wherein the obtaining, by a fourth device, third information comprises:
receiving, by the fourth device, a fourth message from the upstream device, wherein the fourth message comprises the third configuration information; and
obtaining, by the fourth device, the fourth configuration information based on the third configuration information.

23. The method according to claim 22, wherein the obtaining the fourth configuration information based on the third configuration information comprises:
obtaining the fourth configuration information based on the third configuration information and/or related information of the third target hop in second information of the first communication, wherein the second information comprises service-related information and/or link-related information of the first communication.

24. The method according to claim 21, wherein the obtaining, by a fourth device, third information comprises:
receiving, by the fourth device, fourth signaling from a network side device in a case that the fourth device is in a radio resource control connected state, wherein the fourth signaling comprises the third information.

25. The method according to claim 22, wherein before the receiving fourth signaling from a network side device, the method further compriscs:
sending, by the fourth device, related information of the third target hop in second information of the first communication to the network side device, wherein the second information comprises service-related information and/or link-related information of the first communication.

26. The method according to claim 21, wherein the obtaining, by a fourth device, third information comprises:
receiving, by the fourth device, fifth signaling from a network side device in a case that the fourth device is in a radio resource control idle state or inactive state; and
searching for, by the fourth device, the third information from the fifth signaling based on related information of the third target hop in second information of the first communication, wherein the second information comprises service-related information and/or link-related information of the first communication.

27. The method according to claim 21, wherein the obtaining, by a fourth device, third information comprises:
searching for, by the fourth device, the third information from sixth signaling based on related information of the third target hop in second information of the first communication in a case that the fourth device is out of network coverage, wherein the second information comprises service-related information and/or link-related information of the first communication.

28. The method according to any one of claims 23 to 27, wherein before the obtaining, by a fourth device, third information, the method further comprises:
obtaining, by the fourth device, the related information of the third target hop in the second information of the first communication from the upstream device.

29. The method according to claim 21, wherein the establishing, by the fourth device, a hop-by-hop sidelink bearer of a third target hop based on the third information comprises:
sending, by the fourth device, a fifth message to the downstream device, wherein the fifth message comprises the fourth configuration information.

30. The method according to claim 1, wherein the first communication is one of the following:
layer 2 sidelink relay communication; and
layer 3 sidelink relay communication.

31. The method according to claim 30, wherein in a case that the first communication is the layer 2 sidelink relay communication, the third configuration information and the fourth configuration information each comprisc at least one of the following:
configuration information of a radio link control layer;
configuration information of a medium access control layer; and
configuration information of a physical layer.

32. The method according to claim 30, wherein in a case that the first communication is the layer 3 sidelink relay communication, the third configuration information and the fourth configuration information each comprise at least one of the following:
configuration information of a service data adaptation protocol layer;
configuration information of a packet data convergence protocol layer;
configuration information of a radio link control layer;
configuration information of a medium access control layer; and
configuration information of a physical layer.

33. A relay communication apparatus, comprising:
a second transmission module, configured to obtain third information, wherein the third information comprises configuration information related to the relay communication apparatus in configuration information for establishing a bearer of first communication; and
a second execution module, configured to establish a hop-by-hop sidelink bearer of a second target hop and/or a hop-by-hop sidelink bearer of a third target hop based on the third information,
wherein the relay communication apparatus is one of relay devices in the first communication, the second target hop is a hop between the relay communication apparatus and an upstream device, the third target hop is a hop between the relay communication apparatus and a downstream device, the upstream device is a relay device or a first device of the first communication, the downstream device is a relay device or a second device of the first communication, the first device is one of a source terminal and a destination terminal of the first communication, the second device is the other of the source terminal and the destination terminal of the first communication, the first communication is sidelink relay communication, and the third information comprises at least one of the following:
third configuration information, wherein the third configuration information is configuration information of the second target hop in the configuration information of the bearer; and
fourth configuration information, wherein the fourth configuration information is configuration information of the third target hop in the configuration information of the bearer.

34. A terminal, comprising a processor and a memory, wherein the memory stores a program or instructions executable on the processor, and the program or instructions, when executed by the processor, implement the steps of the relay communication method according to any one of claims 1 to 19.

35. A network side device, comprising a processor and a memory, wherein the memory stores a program or instructions executable on the processor, and the program or instructions, when executed by the processor, implement the steps of the relay communication method according to any one of claims 21 to 32.

36. A readable storage medium, wherein the readable storage medium stores a program or instructions, and the program or instructions, when executed by a processor, implement the steps of the relay communication method according to any one of claims 1 to 19, or the relay communication method according to any one of claims 21 to 32.
